# EUROPEAN PATENT APPLICATION

(11) **EP 4 444 019 A1**
(43) Date of publication of application: **09.10.2024**
(21) Application number: 22920041.5
(22) Date of filing: 20.12.2022
(51) Int. Cl.: H04W 76/00

(54) **COMMUNICATION METHOD, APPARATUS, AND SYSTEM**

(30) Priority: 14.01.2022 CN 202210045092
(71) Applicant: Honor Device Co., Ltd., Shenzhen, Guangdong 518040 (CN)
(72) Inventor: ZHANG, Jian, Shenzhen, Guangdong 518040 (CN)
(74) Representative: Isarpatent
(86) International application number: PCT/CN2022/140508
(87) International publication number: WO 2023/134410

(57) **Abstract**

This application provides a communication method, apparatus and system, which are applied to the field of communication technologies. The communication method includes: First, a terminal device sends a first message to a serving access network device, where the first message includes a first request and first assistance information, the first request is for requesting to set up a small data transmission SDT session, and the first assistance information is for determining whether to perform anchor migration; the serving access network device then sends a sixth message to an anchor access network device, where the sixth message indicates to set up the SDT session, and the sixth message includes the first assistance information; and the anchor access network device then sends a seventh message to the serving access network device, where the seventh message includes second indication information, and the second indication information indicates whether to perform anchor migration. The method provides a processing scheme of whether the anchor migration needs to be performed when SDT is performed, and the method can avoid a waste of communication resources caused through the anchor migration in a non-essential scenario.

## Description

This application claims priority to Chinese Patent Application No. 202210045092.X, filed with the China National Intellectual Property Administration on January 14, 2022 and entitled "COMMUNICATION METHOD, APPARATUS AND SYSTEM", which is incorporated herein by reference in its entirety.

### TECHNICAL FIELD

Embodiments of this application relate to the field of communication technologies, and in particular, to a communication method, apparatus and system.

### BACKGROUND

In the 5th generation new radio (5th generation new radio, 5G NR) system, an RRC inactive (RRC_INACTIVE) state is introduced at a radio resource control (radio resource control, RRC) layer, and a terminal device may be in the RRC inactive state when there is no data transmission. The terminal device may transmit data in the RRC inactive state based on a small data transmission (small data transmission, SDT) technology.

However, due to mobility of the terminal device, a base station at which the terminal device currently resides may be different from an anchor base station at which the terminal device resides before entering the RRC inactive state. There is no relevant solution to whether to migrate an anchor of the base station when SDT is performed.

### SUMMARY

This application provides a communication method, apparatus and system, and provides a processing scheme for whether to perform anchor migration when SDT is performed.

To achieve the foregoing objective, the following technical solutions are used in this application:

According to a first aspect, a communication method is provided. The communication method is applied to a terminal device, and includes: The terminal device generates a first message, where the first message includes a first request and first assistance information, the first request is for requesting to set up a small data transmission SDT session, and the first assistance information is for determining whether to perform anchor migration. Thereafter, the terminal device sends the first message to a serving access network device. The first assistance information may include at least one of the following: a duration of SDT traffic, a number of times for which the terminal device expects to continuously transmit data in the SDT session, a time interval and duration for which the terminal device expects to monitor scheduling information, a moving trajectory of the terminal device, mobility of the terminal device, a maximum latency allowed for scheduling the data, the total amount of data to be sent during the SDT session. The SDT session is for transmission of the SDT traffic.

Based on this scheme, the terminal device, when initiating the SDT, can send the first assistance information along with the first request. The first assistance information can be for determining whether to perform anchor migration. It can be learned that the communication method provided by this application provides a processing scheme of whether to perform anchor migration when the SDT is performed. In addition, determining, based on the first assistance information, whether to perform anchor migration can ensure to perform anchor migration under appropriate conditions, to avoid a waste of communication resources caused through the anchor migration in a non-essential scenario.

With reference to the above first aspect, in one possible implementation, the first assistance information is collected by the terminal device or configured for the terminal device by a core network device.

With reference to the above first aspect, in one possible implementation, the first assistance information can further be for performing SDT in the SDT session, and the first assistance information can further include at least one of the following: an indication of whether the data transmitted in the SDT session is fragmented, an amount of remaining data to be transmitted in the SDT session, information of a radio bearer, or attribute information of traffic carried by the radio bearer. The information of the radio bearer includes at least one of a type of the radio bearer or a type of the traffic carried by the radio bearer, and the attribute information of the traffic includes at least one of a frequency at which the traffic is sent, a period at which the traffic is sent, time for which the traffic lasts, or a data amount of the traffic.

With reference to the first aspect, in a possible implementation, the communication method further includes: The terminal device obtains a first data packet. That the terminal device generates a first message may specifically include: generating the first message if a size of the first data packet is less than or equal to a first threshold, where the first message includes the first data packet.

Based on this scheme, the SDT may be triggered when the size of the data packet is less than the threshold. It should be understood that for a small data packet to be transmitted by using the SDT session, the terminal device may not need to switch to an RRC connected state, so that communication resources occupied due to state switching can be saved.

In a possible implementation, the method further includes: obtaining second data packet, and sending a second message or a third message to an anchor access network device if a size of the second data packet is greater than the first threshold, where the second message is for requesting the anchor access network device to configure the terminal device to switch to a radio resource control RRC connected state, and the third message indicates to terminate the SDT session.

Based on this scheme, after the SDT is triggered, the RRC connected state is switched for transmission if the transmitted data packet is greater than the threshold, to avoid that the SDT session transmits a larger data packet.

With reference to the first aspect, in another possible implementation, the second message or the third message is any one of the following: an RRC message, a media access control control element MAC CE, or a dedicated control channel DCCH message.

With reference to the first aspect, in a possible implementation, the communication method may further include: obtaining a second data packet, and thereafter, sending the second data packet by using the SDT session, where a size of the second data packet is less than the first threshold, equal to the first threshold, or greater than the first threshold.

With reference to the above first aspect, in one possible implementation, if a number of data packets sent by using the SDT session reaches a second threshold, the communication method may further include: sending a fourth message or a fifth message to an anchor access network device, where the fourth message is for requesting the anchor access network device to configure the terminal device to switch to an RRC connected state, and the fifth message indicates to terminate the SDT session.

Based on the above two implementations, the size of the data packet sent by the terminal device after the SDT is triggered may not be limited, but there is a limit to the number of data packets in this scenario. Thereby, it can be avoided that the SDT session transmits too many large data packets, increasing a load of the SDT session.

With reference to the first aspect, in a possible implementation, the fourth message or the fifth message is any one of the following: an RRC message, a media access control control element MAC CE, or a dedicated control channel DCCH message.

With reference to the first aspect, in a possible implementation, the communication method may further include: The terminal device starts a timer when sending the first message. The duration of the timer is a first duration when the serving access network device is not the anchor access network device. The duration of the timer is a second duration when the serving access network device is the anchor access network device. The first duration is greater than the second duration. The terminal device may monitor a response message of the first message during running of the timer.

According to a second aspect, a communication method is provided. The communication method is applied to a serving access network device, and includes: receiving a first message from a terminal device, where the first message includes a first request and first assistance information, the first request is for setting up a small data transmission SDT session, and the first assistance information is for determining whether to perform anchor migration; thereafter, sending a sixth message an anchor access network device, where the sixth message indicates to set up the SDT session, and the sixth message includes the first assistance information; and receiving a seventh message from the anchor access network device, where the seventh message includes second indication information, and the second indication information indicates whether to perform anchor migration.

Based on this scheme, the serving access network device may transmit first assistance information to the anchor access network device, and the first assistance information may be for determining whether to perform anchor migration. In addition, it may be determined, based on the second indication information sent by the anchor access network device, whether to perform anchor migration.

With reference to the second aspect, in a possible implementation, the first assistance information includes at least one of the following: a duration of the SDT traffic, a number of times for which the terminal device expects to continuously transmit data in the SDT session, a time interval and duration for which the terminal device expects to monitor scheduling information, a moving trajectory of the terminal device, mobility of the terminal device, a maximum latency allowed for scheduling the data, or a total amount of data to be sent during the SDT session. The SDT session is for transmission of the SDT traffic.

With reference to the above second aspect, in one possible implementation, the first assistance information is further for assisting SDT, and the first assistance information further includes at least one of the following: an indication of whether the data transmitted in the SDT session is fragmented, an amount of remaining data to be transmitted in the SDT session, information of a radio bearer, or attribute information of traffic carried by the radio bearer. The information of the radio bearer includes at least one of a type of the radio bearer or a type of the traffic carried by the radio bearer, and the attribute information of the traffic includes at least one of a frequency at which the traffic is sent, a period at which the traffic is sent, time for which the traffic lasts, or a data amount of the traffic.

With reference to the above second aspect, in a possible implementation, the sixth message further includes at least one of the following: a locale identifier LCID of the radio bearer transmitting the first message, an information list of a network slice supported by the serving access network device, or a security capability possessed by the serving access network device.

With reference to the above second aspect, in one possible implementation, the second indication information indicates to perform anchor migration, and the seventh message further includes the first assistance information, and the first assistance information is further for assisting the SDT and/or for determining whether to switch the terminal device to an RRC connected state.

With reference to the above second aspect, in one possible implementation, the seventh message further includes third indication information, where the third indication information indicates whether to recommend the terminal device to switch to the RRC connected state.

With reference to the above second aspect, in one possible implementation, the second indication information indicates to perform anchor migration, and the seventh message further includes second assistance information for assisting the SDT and/or for determining whether to switch the terminal device to the RRC connected state.

With reference to the second aspect, in a possible implementation, the second assistance information includes at least one of the following: an indication of whether to allow that the terminal device sends or receives data in an RRC inactive state, whether to allow that the terminal device selects network slice information to send the data in the RRC inactive state, a period of the RRC inactive state of the terminal device, time for which the SDT session lasts, a duration for which the terminal device sends a data packet in the RRC inactive state, an interval for which the terminal device sends or receives a data packet in the RRC inactive state, a time interval for which the SDT session is set up, a number and sizes of data packets sent during the SDT session, a number and sizes of data packets sent by the terminal device in the RRC inactive state, a moving trajectory of the terminal device in the RRC inactive state, a number of cells traversed by the terminal device when sending data in the RRC inactive state, a moving speed of the terminal device when sending data in the RRC inactive state, or an identifier of an SDT bearer.

With reference to the above second aspect, in one possible implementation, the second indication information indicates to perform anchor migration, and the communication method may further include: sending a path switch request to a first core network device, and the path switch request is for requesting the first core network device to switch a path of a core network to the serving access network device.

With reference to the second aspect, in a possible implementation, the first message includes the first data packet, and the communication method may include: sending the first data packet to a user-plane function network element.

According to a first aspect, a communication method is provided. The communication method is applied to an anchor access network device, and includes: receiving a sixth message from the serving access network device, where the sixth message indicates to set up an SDT session, the sixth message includes first assistance information, and the first assistance information is for determining whether to perform anchor migration; and sending a seventh message to the serving access network device, where the seventh message includes second indication information, and the second indication information indicates whether to perform anchor migration.

With reference to the third aspect, in a possible implementation, the first assistance information includes at least one of the following: a duration of SDT traffic, a number of times for which a terminal device expects to continuously transmit data in the SDT session, a time interval and duration for which the terminal device expects to monitor scheduling information, a moving trajectory of the terminal device, mobility of the terminal device, a maximum latency allowed for scheduling the data, or a total amount of data to be sent during the SDT session. The SDT session is for transmission of the SDT traffic.

With reference to the above third aspect, in one possible implementation, the first assistance information is further for assisting SDT, and the first assistance information further includes at least one of the following: an indication of whether the data transmitted in the SDT session is fragmented, an amount of remaining data to be transmitted in the SDT session, information of a radio bearer, or attribute information of traffic carried by the radio bearer. The information of the radio bearer includes at least one of a type of the radio bearer or a type of the traffic carried by the radio bearer, and the attribute information of the traffic includes at least one of a frequency at which the traffic is sent, a period at which the traffic is sent, time for which the traffic lasts, or a data amount of the traffic.

With reference to the above third aspect, in one possible implementation, if the second indication information indicates to perform anchor migration, the seventh message further includes the first assistance information, and the first assistance information is further for assisting the SDT and/or for determining whether to switch the terminal device to an RRC connected state.

With reference to the above third aspect, in one possible implementation, if the second indication information indicates to perform anchor migration, the seventh message further includes third indication information, and the third indication information indicates whether to recommend the terminal device to switch to the RRC connected state.

According to a fourth aspect, a communication method is provided. The communication method is applied to an anchor access network device, and includes: receiving second assistance information from a core network device during setting up of a radio bearer, where the second assistance information is for assisting SDT and/or for determining whether to perform anchor migration; receiving a sixth message from a serving access network device, where the sixth message indicates to set up an SDT session, the sixth message includes first assistance information, the first assistance information is for determining whether to perform anchor migration; and thereafter, sending a seventh message to the serving access network device, where the seventh message includes second indication information, and the second indication information indicates whether to perform anchor migration.

Based on this scheme, the anchor access network device may obtain the second assistance information from the core network device during the setting up of the radio bearer, and then the terminal device may obtain the first assistance information when the terminal device initiates the SDT, so that when initiating the SDT, the anchor access network device may determine, based on the first assistance information and the second assistance information whether to perform anchor migration. The communication method provides a processing scheme whether migration of the anchor is required when SDT is performed.

The terminal device, when initiating the SDT, can send the first assistance information along with the first request. The first assistance information can be for determining whether to perform anchor migration. It can be learned that the communication method provided by this application provides a processing scheme of whether to perform anchor migration when the SDT is performed. In addition, the method of this application of determining, based on the first assistance information, whether to perform anchor migration can avoid a waste of communication resources caused through the anchor migration in a non-essential scenario.

With reference to the fourth aspect above, in one possible implementation, the second assistance information is information collected by the core network device or static subscription information.

With reference to the fourth aspect, in a possible implementation, the second assistance information includes at least one of the following: an indication of whether to allow that the terminal device sends or receives data in an RRC inactive state, whether to allow that the terminal device selects network slice information to send the data in the RRC inactive state, a period of the RRC inactive state of the terminal device, time for which the SDT session lasts, a duration for which the terminal device sends a data packet in the RRC inactive state, an interval for which the terminal device sends or receives a data packet in the RRC inactive state, a time interval for which the SDT session is set up, a number and sizes of data packets sent during the SDT session, a number and sizes of data packets sent by the terminal device in the RRC inactive state, a moving trajectory of the terminal device in the RRC inactive state, a number of cells traversed by the terminal device when sending data in the RRC inactive state, a moving speed of the terminal device when sending data in the RRC inactive state, or an identifier of an SDT bearer.

With reference to the fourth aspect, in a possible implementation, the first assistance information includes at least one of the following: a duration of SDT traffic, a number of times for which a terminal device expects to continuously transmit data in the SDT session, a time interval and duration for which the terminal device expects to monitor scheduling information, a moving trajectory of the terminal device, mobility of the terminal device, a maximum latency allowed for scheduling the data, or a total amount of data to be sent during the SDT session. The SDT session is for transmission of the SDT traffic.

With reference to the above fourth aspect, in one possible implementation, the first assistance information is further for assisting the SDT, and the first assistance information further includes at least one of the following: an indication of whether the data transmitted in the SDT session is fragmented, an amount of remaining data to be transmitted in the SDT session, information of a radio bearer, or attribute information of traffic carried by the radio bearer. The information of the radio bearer includes at least one of a type of the radio bearer or a type of the traffic carried by the radio bearer, and the attribute information of the traffic includes at least one of a frequency at which the traffic is sent, a period at which the traffic is sent, time for which the traffic lasts, or a data amount of the traffic.

With reference to the fourth aspect above, in one possible implementation, if the second indication information indicates to perform anchor migration, the seventh message further includes the first assistance information and the second assistance information, and the first assistance information and the second assistance information are further for determining whether to switch a terminal device to an RRC connected state.

With reference to the above fourth aspect, in one possible implementation, if the second indication information indicates to perform anchor migration, the seventh message further includes third indication information, and the third indication information indicates whether to recommend the terminal device to switch to the RRC connected state.

With reference to the above fourth aspect, in one possible implementation, if the second indication information indicates not to perform anchor migration, the seventh message further includes partial context of the terminal device and configuration information of the SDT session.

With reference to the above fourth aspect, in one possible implementation, if the second indication information indicates to perform anchor migration, the seventh message further includes full context of the terminal device.

According to a fifth aspect, a communication apparatus is provided is configured to implement the above method. The communication apparatus may be the serving access network device of the first aspect described above, may be the anchor access network device of the second to fourth aspects described above, or may be the terminal device of the fifth aspect described above. The communication apparatus may include a corresponding module, a unit, or a means (means) for implementing the method described above, and the module, unit, or means may be implemented by hardware, software, or hardware executing corresponding software. The hardware or software includes one or more modules or units corresponding to the above functions.

In a possible implementation, the communication apparatus includes a processing module and a transceiver module, the transceiver module is configured to perform operations of receiving and sending a message by a communication apparatus side in the method of the first aspect, the second aspect, the third aspect or the fourth aspect described above; The processing module is configured to invoke instructions to perform an operation of processing or controlling a message performed by the communication apparatus side in the method of the first aspect, the second aspect, the third aspect or the fourth aspect described above.

According to a sixth aspect, a communication apparatus is provided, including: a processor, and the processor is configured to be coupled to a memory, and after reading computer instructions stored in the memory, to perform the method according to the first, second, third or fourth aspect based on the instructions.

In a possible implementation, the communication apparatus further includes a memory. The memory is configured to store computer instructions.

In a possible implementation, the apparatus further includes a communication interface. The communication interface is for the communication apparatus to communicate with other devices. For example, the communication interface may be a transceiver, an input/output interface, an interface circuit, an output circuit, an input circuit, a pin, or a related circuit.

In a possible implementation, the communication apparatus may be a chip or a chip system. When the communication apparatus is the chip system, the communication apparatus may include a chip, or may include a chip and another discrete device.

In one possible implementation, when the communication apparatus is a chip or a chip system, the above-mentioned communication interface may be an input/output interface, an interface circuit, an output circuit, an input circuit, a pin or related circuit on the chip or chip system. The processor described above may also be embodied as a processing circuit or a logic circuit.

According to a seventh aspect, a computer-readable storage medium is provided, the computer-readable storage medium stores instructions, and when run on a computer, the computer-readable storage medium enables the computer to perform the method according to the foregoing first, second, third, or fourth aspect.

According to an eighth aspect, a computer program product including instructions is provided, and when run on a computer, the computer program product enables the computer to perform the method according to the first, second, third, or fourth aspect.

According to a ninth aspect, a communication system is provided, the communication system includes a generator performing the data transmission method according to the first aspect, an updater performing the data transmission method according to the second aspect, and an updater performing the data transmission method according to the third aspect.

For the technical effects brought by any one of possible implementations in the fifth aspect to the ninth aspect, refer to the technical effects brought by different implementations in the first, second, third, or fourth aspect. Details are not described herein again.

### BRIEF DESCRIPTION OF DRAWINGS

FIG. 1 is a diagram of an architecture of a communication network according to an embodiment of this application;
FIG. 2 is a schematic diagram of an interactive process of UE requesting to resume an RRC connected state for data transmission according to an embodiment of this application;
FIG. 3 is a flowchart of SDT according to an embodiment of this application;
FIG. 4 is another flowchart of SDT according to an embodiment of this application;
FIG. 5 is a schematic diagram of a structure of a communication system according to an embodiment of this application;
FIG. 6 is a schematic diagram of a structure of a communication device according to an embodiment of this application;
FIG. 7 is a schematic diagram of a hardware structure of UE according to an embodiment of this application;
FIG. 8 is a flowchart of a communication method according to an embodiment of this application;
FIG. 9 is a flowchart of another communication method according to an embodiment of this application;
FIG. 10 is a flowchart of still another communication method according to an embodiment of this application;
FIG. 11 is a flowchart of a method for setting up a radio bearer according to an embodiment of this application;
FIG. 12 is a flowchart of still another communication method according to an embodiment of this application;
FIG. 13 is a flowchart of still another communication method according to an embodiment of this application;
FIG. 14 is a flowchart of still another communication method according to an embodiment of this application;
FIG. 15 is a flowchart of still another communication method according to an embodiment of this application;
FIG. 16 is a flowchart of still another communication method according to an embodiment of this application;
FIG. 17 is a flowchart of still another communication method according to an embodiment of this application;
FIG. 18 is a flowchart of still another communication method according to an embodiment of this application; and
FIG. 19 is a schematic diagram of a structure of a communication apparatus according to an embodiment of this application.

### DESCRIPTION OF EMBODIMENTS

Technical solutions in embodiments of this application are described below with reference to the accompanying drawings in embodiments of this application. In the descriptions of this application, "/" indicates that the associated objects are in an "or" relationship unless otherwise specified. For example, A/B may represent A or B. In this application, "and/or" describes only an association relationship for describing associated objects and indicates that three relationships may exist. For example, A and/or B may represent: only A exists, both A and B exist, and only B exists, where A and B may be singular or plural. In addition, in the descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one of a, b, or c may represent: a, b, c, a and b, a and c, b and c, or a, b, and c, where a, b, and c may be singular or plural. For ease of describing the technical solutions in embodiments of this application clearly, in embodiments of this application, terms such as "first" and "second" are used to distinguish same or similar items with basically same functions and roles. A person skilled in the art may understand that the terms "first", "second", and the like, and do not limit a quantity and an execution order, and the terms "first", "second", and the like are not limited to be necessarily different. Moreover, in embodiments of this application, terms such as "illustrative" and "for example" are used for presenting an example, an instance, or an illustration. Any embodiment or design solution described as an "exemplary" or "for example" in embodiments of this application should not be explained as being more preferred or having more advantages than another embodiment or design solution. To be precise, the terms such as "illustrative" and "for example" are intended to present a related concept in a specific manner to facilitate understanding.

For ease of understanding, the following briefly describes some terms and relevant technologies in this application.

### 1. 5th generation (5th generation, 5G) network architecture:

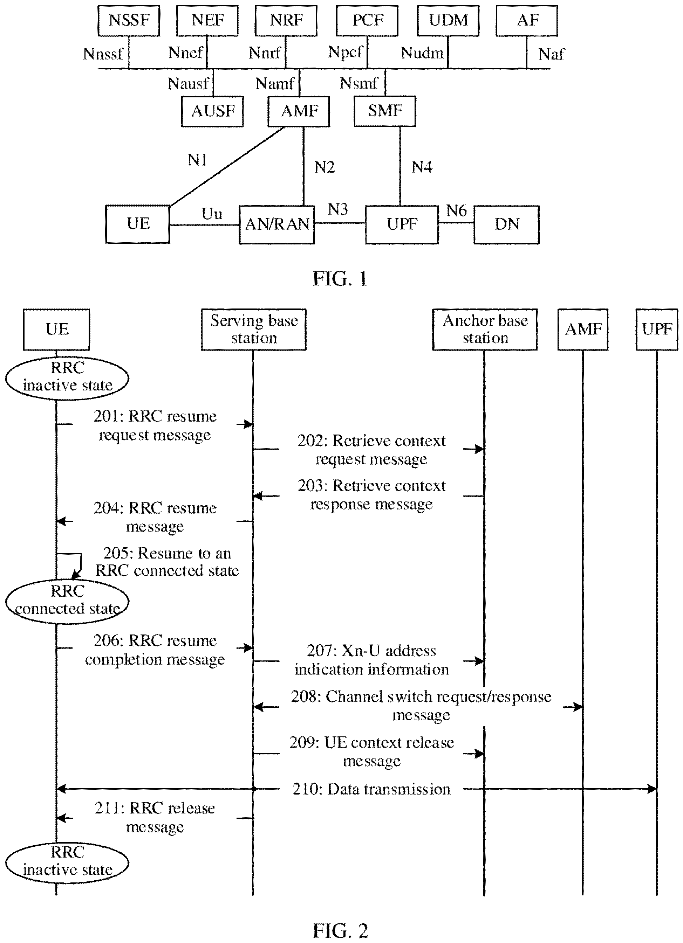

FIG. 1 is a schematic diagram of a 5G network architecture. In FIG. 1, a network service architecture of a 5G system is used as an example to illustrate an interactive relationship and a corresponding interface between a network function and an entity. Network functions and entities included in the 3rd generation partnership project (the 3rd generation partnership project, 3GPP) service-based network architecture (service-based architecture, SBA) mainly includes: user equipment (user equipment, UE), an access network (access network, AN) or a radio access network (radio access network, RAN), a user plane function (user plane function, UPF), a data network (data network, DN), an access management function (access management function, AMF), a session management function (session management function, SMF), an authentication server function (authentication server function, AUSF), a policy control function (policy control function, PCF), an application function (application function, AF), a network slice selection function (network slice selection function, NSSF), unified data management (unified data management, UDM), a network exposure function (network exposure function, NEF), and network repository function (network repository function, NRF).

A network function can be used as one network element running on dedicated hardware, a software instance running on dedicated hardware, or a virtual function instantiated on an appropriate platform, for example, implemented on cloud infrastructure.

Main functions of the network elements are described below in detail.

AN/RAN: Various forms of base stations may be included in the AN/RAN, for example: a macro base station, a micro base station (also referred to as a "small station"), a distribute unit-control unit (distribute unit-control unit, DU-CU) or the like. In addition, the base station may be a radio controller in a cloud radio access network (cloud radio access network, CRAN) scenario, a relay station, an access point, an in-vehicle device, a wearable device, a network device in a future evolved public land mobile network (public land mobile network, PLMN) network, or the like. The AN/RAN may also include a broadband network service gateway (broadband network gateway, BNG), a convergence switch, a non-3GPP access device, or the like.

The AN/RAN is mainly responsible for functions such as radio resource management on an air interface side, uplink and downlink data classification, quality of service (quality of service, QoS) management, data compression and encryption, and completion of signaling processing with a control plane network element or completion of data forwarding with a user-plane function network element. The specific form and structure of the AN/RAN are not limited in embodiments of this application. For example, in systems using different radio access technologies, names of devices having base station functions may be different. For example, the base station may be an evolved universal terrestrial radio access network (evolved universal terrestrial radio access network, E-UTRAN) device, such as an evolved NodeB (evolutional NodeB, eNB or e-NodeB) in LTE, or may be a next generation radio access network (next generation radio access network, NG-RAN) device (such as a gNB) in the 5G system.

UPF: The UPF is mainly responsible for packet routing and forwarding, QoS processing of user plane data, charging information statistics, and the like. A transmission resource and a scheduling function for providing a service to UE in the UPF are managed and controlled by an SMF.

DN: The DN is a network for transmitting data. For example, the DN may be an operator service network, internet access or a third-party service network.

For descriptions of functions and the like of the AUSF, NSSF, NEF, NRF, UDM, and the other network elements, refer to explanations and descriptions in a conventional technology. Details are not described herein again.

### 2. Radio resource control (radio resource control, RRC) state:

Three RRC states are defined in 5G NR: an inactive state, a connected state, and an idle (IDLE) state. Introductions of the three states are as follows:
(1). Connected state: The connected state, namely, an RRC_CONNECTED state, is also referred to as a connected state. The connected state means that an RRC connection between UE and an access network is established. When the UE is in the connected state, connections between the UE and the access network (for example, a base station), and between the UE and a core network (for example, an AMF unit) are established. When data needs to be transmitted, the data can be transmitted directly through the established connections. The RRC connection is for processing a control plane message between the UE and the access network.
(2). Inactive state: The inactive state, namely, an RRC_INACTIVE state, is also referred to as a deactivated state or a third state. The inactive state means that an RRC connection between the UE and the access network (for example, a base station) is disabled, but a connection between the access network (for example, the base station) corresponding to the UE and a core network (for example, the AMF) remains on. In the prior art, when the UE is in a deactivated state, if data needs to be transmitted, the RRC connection between the UE and the access network (for example, the base station) needs to be first resumed, and then the data can be transmitted.
   After the UE enters the inactive state, context (Context) of the UE is suspended (suspend) on a terminal side and a base station side and is stored in a last cell in which the UE resides before entering the inactive state, or in a last cell (also referred to as an anchor (anchor) cell) that serves the UE. When there is a data and/or signaling transmission requirement, the UE may obtain the context of the UE by initiating an RRC resume request (RRCResumeRequest), to resume the RRC connection based on the context of the UE. For example, the context of the UE includes: security context of the UE or UE capability information.
(3) Idle state: The idle state, namely, RRC_IDLE, and means that no RRC connection is established between the UE and an access network device (for example, a base station) and no connection is established between the access network device (for example, the base station) corresponding to the UE and a core network device (for example, an AMF). When the UE is in the idle state, if data needs to be transmitted, a connection between the UE and the access network device (for example, the base station) and a connection between the access network device (for example, the base station) and the core network device (for example, the AMF) need to be first established, and then the data can be transmitted.

In addition, a base station to which a cell in which the UE currently resides belongs, or a base station that currently serves the UE, may be referred to as a serving base station. A base station to which a last cell in which the UE resides before entering an inactive state belongs, or a last base station that serves the UE before entering the inactive state, may be referred to as an anchor base station. It should be noted that, the UE has mobility, and the UE may move after entering the inactive state, so that the serving base station of the UE may be different from the anchor base station of the UE.

### 3. Switching an RRC inactive state to an RRC connected state:

In the prior art, if UE has data to be sent in the RRC inactive state, the UE may switch to the RRC connected state before transmitting the data and/or signaling. For example, FIG. 2 illustrates an interactive process where UE requests to resume an RRC connected state for data transmission. As shown in FIG. 2, the interactive process may include the following steps:
Step 201: UE in an RRC inactive state sends an RRC resume request (RRCResumeRequest) message to a serving base station.
Step 202: If the serving base station of the UE is not an anchor base station of the UE, the serving base station sends a retrieve context request (Retrieve UE CONTEXT REQUEST) message to the anchor base station for requesting context of the UE.
Step 203: The anchor base station sends a retrieve context response (Retrieve UE CONTEXT RESPONSE) message to the serving base station, and the message includes the context of the UE.
Step 204: After receiving the retrieve context response message, the serving base station sends an RRC resume (RRCResume) message to the UE for switching the UE to the RRC connected state.
Step 205: The UE switches to the RRC connected state after receiving the RRC resume message.
Step 206: The UE sends an RRC resume completion (RRCResumeComplete) message to the serving base station after resuming to the RRC connected state.
Step 207: The serving base station sends Xn-U address indication information (Xn-U address indication) to the anchor base station after receiving the RRC resume completion message.
Step 208: The serving base station sends a path switch request (path switch request) message to an AMF, and receives a path switch response (path switch response) message, and performs channel switching to switch a channel of a core network device to the serving base station.
Step 209: After the channel is switched, the serving base station sends a UE context release (UE context release) message to the anchor base station to indicate the anchor base station to release the context of the UE.
It should be understood that after step 208, the serving base station becomes a new anchor base station. Thus, the original anchor base station (namely, the anchor base station in FIG. 2) does not need to reserve the context of the UE, so that the context of the UE can be released.
Step 210: After the channel is switched, the UE in the RRC connected state may perform data transmission with a UPF.
Step 211: After completion of the data transmission, the serving base station (and also the anchor base station) may send an RRC release (RRCRelease) message to the UE to enable the UE to switch to the RRC inactive state.

The RRC release message may include a suspended configuration (suspendconfig) for indicating the UE to suspend the context of the UE.

The UE resumed to the inactive state may re-perform the above steps 201 to 211 if the UE needs to send data again.

However, it can be learned from the above steps 201 to 211, if a number of data transmission times is frequent, the UE needs to switch between the inactive state and the connected state frequently, thereby occupying a large amount of signaling resources. However, occupying the large amount of signaling resources to transmit a small data packet results in a waste of signaling resources. Thus, in one possible implementation, a small data transmission (small data transmission, SDT) technology is provided that enables the UE to transmit data in the RRC inactive state.

### 4. SDT:

UE performs SDT in an inactive state, which can be divided into two scenarios of anchor migration and anchor non-migration. The anchor migration means that when the UE requests to perform SDT in the inactive state, a scheme similar to steps 206 to 208 above may be performed to switch a channel of an AMF to a current serving base station, so that the current serving base station becomes an anchor base station (namely, the anchor migration) before data transmission. The anchor non-migration means that there is no need to switch the channel of the AMF to the current serving base station, and an original anchor base station controls data transmission.

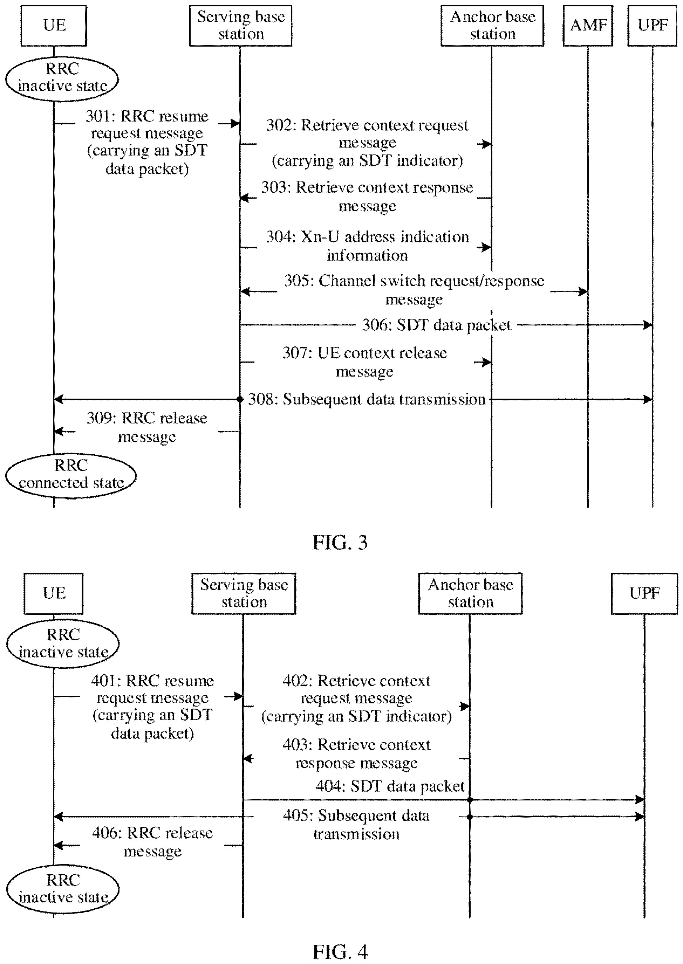

For example, FIG. 3 is a flowchart of performing SDT in a scenario of anchor migration, and as shown in FIG. 3, the process may include the following steps:
Step 301: An RRC resume request message sent by UE in an RRC inactive state to a serving base station carries an SDT data packet, where the RRC resume request message carrying the SDT data packet may be for requesting to perform SDT.
Step 302: If the serving base station of the UE is not an anchor base station of the UE, the serving base station sends a retrieve context request message to the anchor base station, where the retrieve context request message may include an SDT indicator for indicating the anchor base station to perform SDT.
Step 303: The anchor base station sends a retrieve context response message to the serving base station.
Step 304: The serving base station sends an Xn-U address indication information to the anchor base station.
Step 305: The serving base station sends a channel switch request message to an AMF and receives a path switch response message, and performs channel switching to switch a channel of a core network device to the serving base station.
Step 306: After the channel is switched, the serving base station directly sends the SDT data packet carried by the UE in the RRC resume request message to a UPF.
Step 307: After the channel is switched, the serving base station also sends a UE context release message to the anchor base station to indicate the anchor base station to release context of the UE.
Step 308: After the channel is switched, the UE transmits a subsequent SDT data packet with the UPF through the serving base station.
Step 309: After completion of the data transmission, the serving base station (also the anchor base station) sends an RRC release message to the UE.

The RRC release message may include a suspended configuration for indicating the UE to suspend the context of the UE.

For another example, FIG. 4 is a flowchart of performing SDT in a scenario of anchor non-migration, and the process may include the following steps:
Step 401: An RRC resume request message sent by UE in an RRC inactive state to a serving base station carries an SDT data packet, where the RRC resume request message carrying the SDT data packet may be for requesting to perform SDT.
Step 402: If the serving base station of the UE is not an anchor base station of the UE, the serving base station sends a retrieve context request message to the anchor base station, where the retrieve context request message may include an SDT indicator for indicating the anchor base station to perform SDT.
Step 403: The anchor base station sends a retrieve context response message to the serving base station.
Step 404: The serving base station sends the SDT data packet carried by the UE in the RRC resume request message to a UPF through the anchor base station.
Step 405: The UE transmits a subsequent SDT data packet with the UPF through the serving base station and the anchor base station.
Step 406: The serving base station sends an RRC release message to the UE after completion of the data transmission is completed.

The RRC release message may include a suspended configuration for indicating the UE to suspend context of the UE.

However, in practical application, if a serving base station of a terminal device is different from an anchor base station when performing SDT, there is currently no relevant solution whether to perform anchor migration.

Embodiments of this application provide a communication method, when a serving base station of a terminal device is different from an anchor base station, the anchor base station may determine, based on assistance information, whether to perform anchor migration.

Embodiments of this application may be applicable to, but not limited to, the following communication systems: a narrow band-internet of things (narrow band-internet of things, NB-IoT) system, a wireless local access network (wireless local access network, WLAN) system, a long term evolution (long term evolution, LTE) system, a 5G mobile communication system, or a later-than-5G communication system, such as a 6G system, a device to device (device to device, D2D) communication system, or vehicle-to-everything.

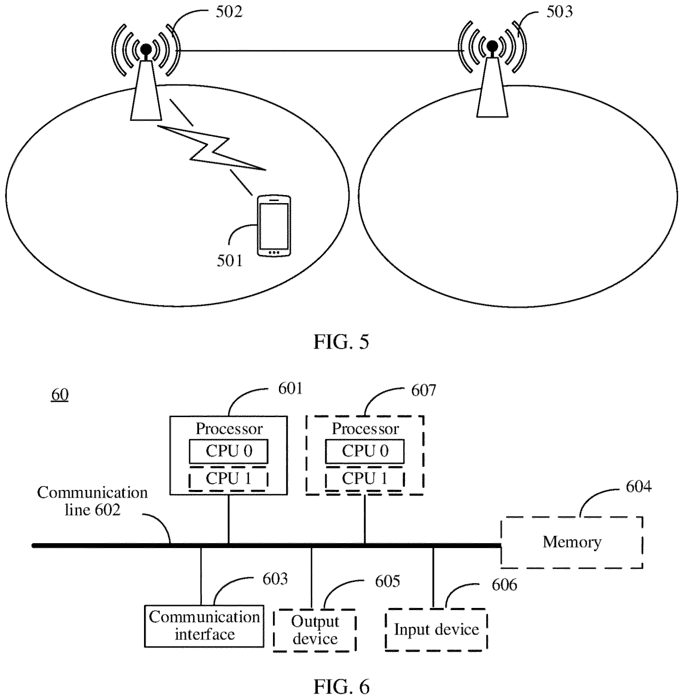

FIG. 5 shows a communication system provided in this embodiment of this application. As shown in FIG. 5, the communication system includes a terminal device 501, a serving access network device 502, and an anchor access network device 503. The anchor access network device 503 is a last access network device that serves the terminal device 501 before the terminal device 501 enters an inactive state, and the anchor access network device 503 is different from the serving access network device 502.

It should be noted that, in embodiments of this application, an access network device to which a cell in which a terminal device currently resides belongs, or an access network device that currently serves the terminal device, may be referred to as a serving access network device (for example, the serving base station as described above). An access network device to which a last cell in which the terminal device resides before entering an inactive state belongs, or a last access network device that serves the terminal device, may be referred to as an anchor access network device (for example, the anchor base station described above).

Alternatively, a 5G communication system is used as an example. A schematic diagram of a network architecture corresponding to a possible communication system shown in FIG. 5 applied to this embodiment of this application may be shown in FIG. 1. For example, the terminal device 501 may be the UE in FIG. 1, the serving access network device 502 or the anchor access network device 503 may be a device in the AN or RAN shown in FIG. 1.

System architectures described in embodiments of this application are intended to more clearly describe the technical solutions in the embodiments of this application, but are not intended to limit the technical solutions provided in embodiments of this application. A person of ordinary skill in the art may know that as the network architectures evolve and a new service scenario emerges, the technical solutions provided in embodiments of this application are also applicable to a similar technical problem.

The access network device in this application may be an apparatus deployed in a radio access network to provide a wireless communication function for the terminal device. The access network device in this embodiment of this application may be a base station, so that the serving access network device 502 may be a serving base station and the anchor access network device 503 may be an anchor base station. The base station may include a number of forms, for example: a macro base station, a micro base station (also known as a small station), a relay station, or an access point (access point). In a system using different radio access technologies, names of an access network device may be different, for example: a base transceiver station (Base Transceiver Station, BTS) in a global system for mobile communication (global system for mobile communication, GSM) or a code division multiple access (code division multiple access, CDMA) network, an NB (NodeB) in wide band code division multiple access (wide band code division multiple access, WCDMA), an eNB or eNodeB (evolutional NodeB) in long term evolution (Long Term Evolution, LTE), or a base station in a 5G network or a future evolved public land mobile network (public land mobile network, PLMN). The access network device may be a broadband network gateway (broadband network gateway, BNG), a convergence switch, a non-3GPP access network device, or the like. Further, the access network device may also be a radio controller in a cloud radio access network (cloud radio access network, CRAN), a transmission and reception point (transmission and reception point, TRP), or a device including the TRP. This is not limited in this embodiment of this application.

The terminal device in the embodiment of this application relates, may be a device having a wireless transceiver function, which may be deployed on land, including indoor or outdoor, handheld or vehicle-mounted. The terminal device can also be deployed on the water surface (such as a ship). The terminal device may be deployed in the air (for example, on an airplane, a balloon, or a satellite). The terminal device may be UE, an access terminal, a terminal unit, a subscriber unit (subscriber unit), a terminal station, a mobile station (Mobile Station, MS), a remote station, a remote terminal, a mobile device, a wireless communication device, a terminal agent, or a terminal apparatus in a 5G network or a future evolved public land mobile network (public land mobile network, PLMN). The access terminal may be a cellular phone (cellular phone), a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, or other processing devices connected to wireless modems, an in-vehicle device, or a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medicine (remote medical), a wireless terminal in a smart grid (smart grid), a wireless terminal in transportation safety (transportation safety), a wireless terminal in a smart city, or a wireless terminal in a smart home. The terminal may be mobile or stationary. A specific type and structure of the terminal are not limited in this embodiment of this application.

Optionally, the terminal device, the serving access network device, and the anchor access network device in the embodiment of this application may adopt a constituent structure shown in FIG. 6 or include components shown in FIG. 6. FIG. 6 is a schematic diagram of a structure of a communication device 60 according to an embodiment of this application. As shown in FIG. 6, the communication device 60 may include one or more processors 601, a communication line 602, and at least one communication interface (FIG. 6 is described only by using an example in which a communication interface 603 and one processor 601 are included), and optionally, may further include a memory 604.

The processor 601 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 602 may include a path for connecting different components.

The communication interface 603 is configured for a transceiver module to communicate with another device or a communication network such as an Ethernet, or a wireless local area network (wireless local area network, WLAN). For example, the transceiver module may be an apparatus such as a transceiver or a transceiver machine. Optionally, the communications interface 603 may alternatively be a transceiver circuit located in the processor 601, and is configured to implement signal input and signal output of the processor.

The memory 604 may be an apparatus having a storage function. For example, the memory may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a disk storage medium or another magnetic storage device, or any other medium that can be used to carry or store expected program code in a form of instructions or a data structure and that can be accessed by a computer. However, the memory is not limited thereto. The memory may exist independently, and is connected to the processor by the communication line 602. The memory may be alternatively integrated with the processor.

The memory 604 is configured to store computer executable instructions for performing the solutions of this application, and is controlled and executed by the processor 601. The processor 601 is configured to execute the computer executable instructions stored in the memory 604 to implement the communication method provided in the following embodiments of this application.

Alternatively, optionally, in embodiments of this application, the processor 601 may perform processing related functions in the communication method provided in the following embodiment of this application, and the communication interface 603 is responsible for communication with another device or a communication network. This is not specifically limited in this embodiment of this application.

Optionally, the computer executable instructions in this embodiment of this application may also be referred to as application code. This is not specifically limited in this embodiment of this application.

In specific implementation, in an embodiment, the processor 601 may include one or more CPUs, for example, CPU0 and CPU1 in FIG. 6.

In specific implementation, in an embodiment, the communication device 60 may include a plurality of processors, for example, the processor 601 and a processor 607 in FIG. 6. Each of the processors may be a single-core (single-core) processor, or may be a multi-core (multi-core) processor. The processor herein may include, but is not limited to, at least one of the following: a central processing unit (central processing unit, CPU), a microprocessor, a digital signal processor (DSP), a micro controller unit (micro controller unit, MCU), an artificial intelligence processor, or various computing devices running software. Each computing device may include one or more cores for executing software instructions to perform operations or processing.

In specific implementation, in an embodiment, the communication device 60 may further include an output device 605 and an input device 606. The output device 605 communicates with the processor 601, and may display information in a plurality of manners. For example, the output device 605 can be a liquid crystal display (liquid crystal display, LCD), a light emitting diode (light emitting diode, LED) display device, a cathode ray tube (cathode ray tube, CRT) display device, or a projector (projector). The input device 606 communicates with the processor 601, and may receive an input from a user in a plurality of manners. For example, the input device 606 may be a mouse, a keyboard, a touchscreen device, or a sensor device.

The communication device 60 sometimes may also be referred to as a communication apparatus, and may be a general-purpose device or a dedicated device. For example, the communication device 60 may be a desktop computer, a portable computer, a network server, a personal digital assistant (personal digital assistant, PDA), a mobile phone, a tablet computer, a wireless terminal device, an embedded device, the foregoing terminal device, the foregoing network device, or a device having a structure similar to that in FIG. 6. A type of the communication device 60 is not limited in this embodiment of this application.

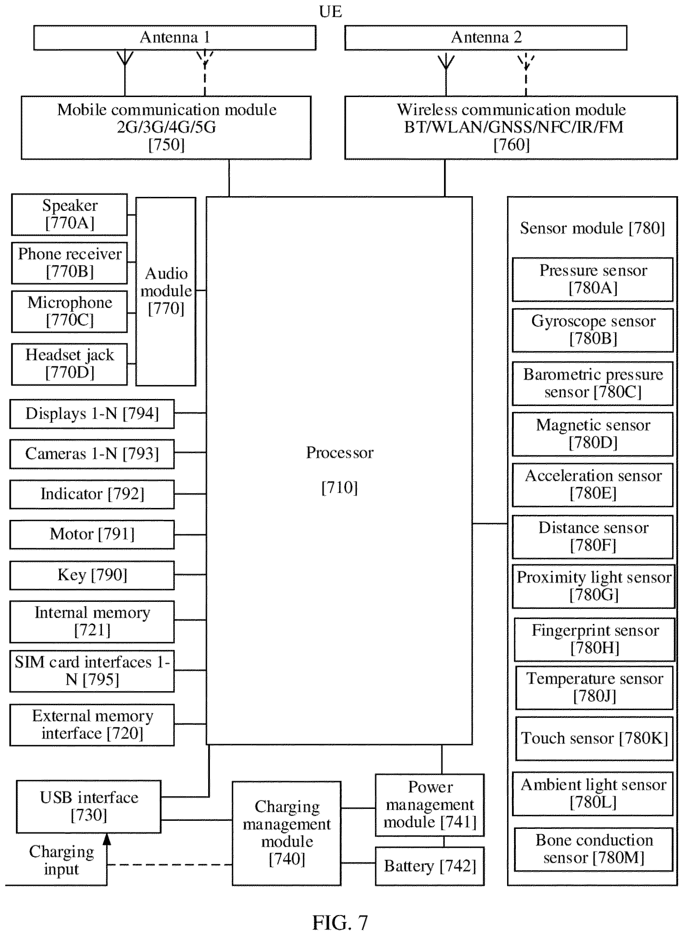

Optionally, FIG. 7 is a schematic diagram of a hardware structure of UE. In some embodiments, the structure of the UE can be shown in FIG. 7, and the UE may include: a processor 710, an external memory interface 720, an internal memory 721, a universal serial bus (universal serial bus, USB) interface 730, a charging management module 740, a power management module 741, a battery 742, an antenna 1, an antenna 2, a mobile communication module 750, a wireless communication module 760, an audio module 770, a speaker 770A, a phone receiver 770B, a microphone 770C, a headset jack 770D, a sensor module 780, a key 790, a motor 791, an indicator 792, a camera 793, a display 794, a subscriber identification module (subscriber identification module, SIM) card interface 795, and the like. The sensor module 780 may include a pressure sensor 780A, a gyroscope sensor 780B, a barometric pressure sensor 780C, a magnetic sensor 780D, an acceleration sensor 780E, a distance sensor 780F, a proximity light sensor 780G, a fingerprint sensor 780H, a temperature sensor 780J, a touch sensor 780K, an ambient light sensor 780L, a bone conduction sensor 780M, and the like.

It may be understood that the structure illustrated in this embodiment does not constitute a specific limitation on the UE. In some other embodiments, the UE may include more or fewer components than those shown in the figure, some components may be combined, some components may be split, or components are arranged in different manners. The components in the figure may be implemented by hardware, software, or a combination of software and hardware.

The processor 710 may include one or more processing units, for example: the processor 710 may include an application processor (application processor, AP), a Modem, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate devices, or may be integrated into one or more processors.

The charging management module 740 is configured to receive charging input from a charger. The charger may be a wireless charger or a wired charger.

The power management module 741 is configured to be connected to the battery 742, the charging management module 740, and the processor 710. The power management module 741 receives an input of the battery 742 and/or the charging management module 740, to supply power to the processor 710, the internal memory 721, a display 794, the camera 793, the wireless communications module 760, and the like.

A wireless communication function of the UE may be implemented through the antenna 1, the antenna 2, the mobile communication module 750, the wireless communication module 760, the modem, the baseband processor, and the like.

The antenna 1 and the antenna 2 are configured to transmit and receive an electromagnetic wave signal. Each antenna in the UE may be configured to cover one or more communication frequency bands. Different antennas may further be multiplexed to improve utilization of the antennas.

The mobile communication module 750 may provide a wireless communication solution that is applied to the UE and that includes 2G/3G/4G/5G and the like.

The wireless communication module 760 may provide a wireless communication solution that is applied to the UE and that includes a wireless local area network (wireless local area network, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 760 may be one or more components that integrate at least one communication processing module. The wireless communication module 760 receives an electromagnetic wave by using the antenna 2, performs frequency modulation on and filters the electromagnetic wave signal, and sends a processed signal to the processor 710. The wireless communication module 760 may further receive a to-be-sent signal from the processor 710, perform frequency modulation on and amplify the to-be-sent signal, and convert the to-be-sent signal into an electromagnetic wave by using the antenna 2 for radiation.

In this embodiment of this application, the wireless communication module 760 may be configured for the UE to send an RRC connection resume request to a network node and receive a response message from the network node.

The UE implements a display function through the GPU, the display 794, the application processor, and the like. The GPU is a microprocessor for image processing and connects the display 794 and the application processor.

The display 794 is configured to display an image and a video. A series of graphical user interfaces (graphical user interfaces, GUIs) may be displayed on the display 794 of the UE.

The UE may implement a photographing function through the ISP, the camera 793, the video codec, the GPU, the display 794, the application processor, and the like.

The camera 793 is configured to capture a still image or video.

The external memory interface 720 may be configured to connect an external storage card such as a micro SD card, to extend a storage capability of the UE.

The internal memory 721 may be configured to store computer executable program code. The executable program code includes instructions. The processor 710 runs the instructions stored in the internal memory 721, to perform various function applications and data processing of the UE.

The UE can implement an audio function by using the audio module 770, the speaker 770A, the receiver 770B, the microphone 770C, the headset jack 770D, and the application processor, for example, music playing or recording. The UE may include a pressure sensor 780A, a barometric pressure sensor 780C, a gyroscope sensor 780B, a magnetic sensor 780D, an acceleration sensor 780E, a distance sensor 780F, an optical proximity sensor 780G, an ambient light sensor 780L, a fingerprint sensor 780H, a temperature sensor 780J, a touch sensor 780K, a bone conduction sensor 780M, a key 790, a motor 791, an indicator 792, and the like.

The SIM card interface 795 is configured to connect a SIM card. The SIM card may be inserted into the SIM card interface 795 or removed from the SIM card interface 795, to implement contact with or separation from the UE. The UE may support one or N SIM card interfaces, where N is a positive integer greater than 1. The SIM card interface 795 can support a Nano SIM card, a micro SIM card, a SIM card, and the like. A plurality of cards may be inserted into a same SIM card interface 795 at the same time. The SIM card interface 795 may also be compatible with an external memory card. The UE interacts with a network through the SIM card, to implement functions such as a call and data communication.

In addition, an operating system, for example, a Harmony operating system, an iOS operating system, an Android operating system, a Windows operating system, runs on the foregoing components. An application may be installed and run on the operating system. In other embodiments, there may be a plurality of operating systems running in the UE.

It should be understood that the hardware modules included in the UE shown in FIG. 7 are only examples for description, and do not constitute a limitation on a specific structure of the UE. In fact, the UE provided in embodiments of this application may further include other hardware modules having an interaction relationship with the hardware modules shown in the figure. This is not specifically limited herein. For example, the UE may further include a flash light and a micro projection apparatus. For another example, if the UE is a PC, the UE may further include components such as a keyboard and a mouse.

With reference to FIG. 1 to FIG. 7, the following describes in detail the communication method provided in embodiments of this application. Devices mentioned in the following embodiments may have the components shown in FIG. 7. Actions, terms, and the like in embodiments of this application may be mutually referenced. This is not limited. In embodiments of this application, names of messages exchanged between devices, names of parameters in the messages, or the like are merely examples. Another name may alternatively be used during specific implementation. This is not limited.

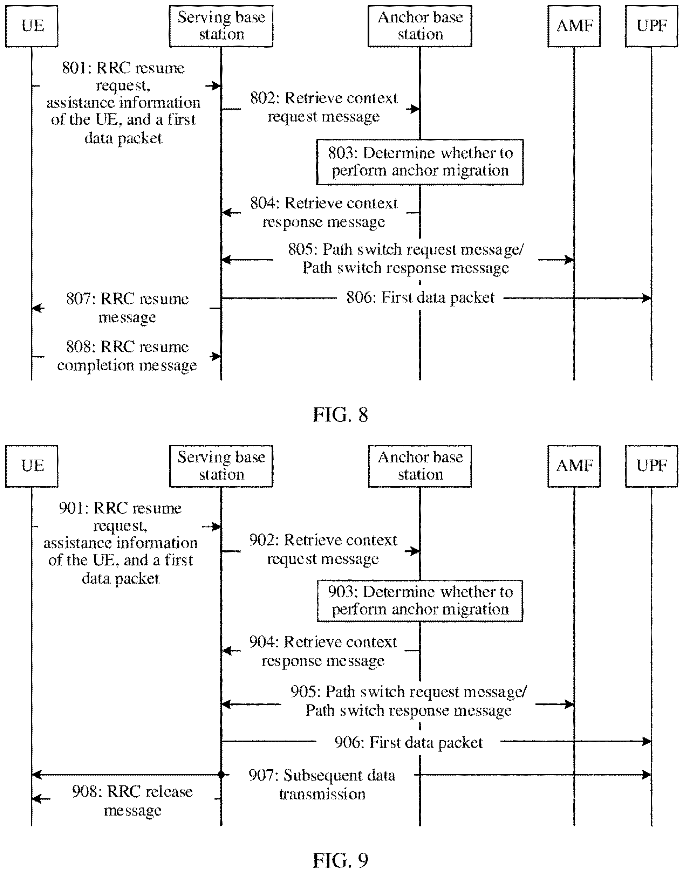

In one possible embodiment, a flowchart of a communication method according to an embodiment of this application may be shown in FIG. 8. For example, an access network device is a base station (a serving access network device is a serving base station, and an anchor access network device is an anchor base station), and a terminal device as a UE. Refer to FIG. 8, the communication method may include the following steps:
Step 801: UE sends an RRC resume request, assistance information of the UE and a first data packet to a serving base station.
Step 801 is performed by the UE after triggering SDT, and triggering the SDT refers to the UE determining to perform SDT.

The UE sends the RRC resume request to the serving base station to request to set up an SDT session, and the SDT session may be for transmission of SDT traffic. The RRC resume request message may carry a cause value that may indicate a purpose of the RRC resume request message. In this embodiment of this application, the cause value carried by the RRC resume request message may be a mobile originating (mobile originating, MO) small data transmission indication (MO-SDT), so that the purpose of the RRC resume request message is for requesting to set up the SDT session.

The assistance information of the UE may include at least one of the following: attribute information of the UE, information of a radio bearer (radio bearer, RB), attribute information of traffic carried by the radio bearer, information of the SDT traffic, and information of the SDT session.

The attribute information of the UE may include at least one of following: a moving trajectory of the UE, mobility of the UE, and a time interval and duration of monitoring scheduling information that the UE expects. The moving trajectory of the UE may be represented by a cell traversed by the UE and time for which the UE is in each cell. The mobility of the UE may be high mobility, medium mobility or low mobility. The time interval and duration of the monitoring scheduling information that the UE expects may be a configuration parameter of small data transmission-discontinuous monitoring (small data transmission-discontinuous reception, SDT-DRX). The parameter of the SDT-DRX may be a parameter configuration expected by the UE during the SDT, or may be pre-configured to the UE by an anchor base station (for example, configured by using an RRC dedicated message, or configured through broadcast). It should be noted that, if the UE receives configuration parameters of the SDT-DRX both by using the RRC dedicated message and through the base station broadcast, the UE chooses a configuration parameter having a shorter monitoring time interval.

The information of the radio bearer may include at least one of the following: a type of the radio bearer and a type of the traffic carried by the radio bearer. The type of the radio bearer may include: a signaling radio bearer (signaling RB, SRB) and a data radio bearer (data RB, DRB), where the SRB may include types of SRB1, SRB2, SRB3, and the like. A type of traffic carried by the SRB bearer may be a signaling traffic type, such as positioning traffic, and traffic carried by the DRB may be data transmission traffic, such as SDT traffic.

The attribute information carried by the radio bearer may include at least one of the following: transmission quality information required by traffic (for example, a transmission latency, or a packet loss rate), frequency at which the traffic is sent (for example, single transmission, multiple transmission, or a specific number of transmission times), a period at which the traffic is sent, the duration (for example, an average duration, a minimum duration, or a maximum duration) of the traffic lasts, and a data amount of the traffic (for example, an average data amount, a minimum data amount, a maximum data amount, or a total data amount).

The information of the SDT traffic may include at least one of the following: a duration of the SDT traffic, or a maximum latency allowed for scheduling data.

The information of the SDT session may include at least one of the following: a number of times for which the UE expects to continuously transmit data in the SDT session, an indication of whether the data transmitted in the SDT session is fragmented, or an amount of data to be transmitted during the SDT session.

In this embodiment of this application, content included in the assistance information of the UE can be for assisting the anchor base station in communicating with the UE, such as in setting up the SDT session and in performing SDT.

Optionally, the assistance information of the UE may be collected by the UE during previous setting up of the radio bearer, or may be configured for the UE by a core network element (for example, an access and mobility management function network element).

In this embodiment of this application, the UE may be configured or indicated to send the assistance information of the UE after the SDT is triggered in various manners. In one possible implementation, it is indicated by using a display configuration message sent by a network side (for example, an RRC dedicated message, or a broadcast message), and the UE after triggering the SDT can check the configuration message to determine whether to send the assistance information of the UE. In another possible implementation, the UE can be pre-configured, so that the UE defaults to sending the assistance information of the UE after triggering the SDT. Optionally, the assistance information of the UE is time-sensitive, the UE may be configured to send the assistance information of the UE after triggering the SDT as long as the assistance information of the UE is valid. In still another possible implementation, the UE can be indicated by a higher layer of the UE, (such as a non-access stratum (Non-access stratum, NAS)), to send the assistance information of the UE after triggering the SDT.

The first data packet is a data packet of the SDT traffic, and the first data packet is transmitted by using the SDT bearer. In addition, a size of the first data packet is less than a first threshold, and the first threshold may be considered a size requirement of the data packet for triggering the SDT. In this embodiment of this application, the UE may determine that the first data packet belongs to the SDT traffic after generating the first data packet, and may also determine that the size of the SDT data packet is less than the first threshold. In this case, the UE may determine to trigger the SDT to request to set up the SDT session to send the first data packet.

It should be noted that, the RRC resume request, the assistance information of the UE, and the first data packet may be encapsulated in a same message to send to the serving base station.

Step 802: The serving base station sends a retrieve context request message to the anchor base station, where the retrieve context request message is for requesting to set up the SDT session.

In the embodiment shown in FIG. 8, the serving base station is different from the anchor base station, so that the serving base station needs to request the anchor base station to set up the SDT session.

The retrieve context request message may include at least one of the following: SDT indication (SDT Indicator) information, a locale identifier (locale identifier, LCID), the assistance information of the UE, a network slice information list supported by the serving base station, or a security capability possessed by the serving base station. The SDT indication information in the retrieve context request message may indicate that the retrieve context request message is for requesting to set up the SDT session. The LCID, the assistance information of the UE, the network slice information list supported by the serving base station, and the security capability possessed by the serving base station may be for assisting the anchor base station in setting up the SDT session and performing SDT.

The LCID is an LCID at a media access control (media access control, MAC) layer including the first data packet. The serving base station can obtain the LCID after parsing a data packet at the MAC layer of the first data packet, and the LCID can be for identifying the radio bearer for transmitting the first data packet. Optionally, the network slice information list supported by the serving base station may include single network slice selection assistance information (single network slice selection assistance information, S-NSSAI). The security capability possessed by the serving base station may include an NR encryption algorithm (NR encryption algorithms), an NR integrity protection algorithm (NR integrity protection algorithms), an E-UTRA integrity protection algorithm (E-UTRA integrity protection algorithms), and the like. The E-UTRA refers to an evolved UMTS terrestrial radio access network (evolved UMTS terrestrial radio access network), and a UMTS refers to a universal mobile telecommunication system (universal mobile telecommunication system).

Step 803: The anchor base station determines whether to perform anchor migration.

In the embodiment of this application, the assistance information of the UE may be for assisting the anchor base station in determining whether to perform anchor migration. The anchor base station, after receiving the retrieve context request message, may determine, based on the carried assistance information of the UE, whether to perform anchor migration.

For example, the assistance information of the UE may include the moving trajectory of the UE and the mobility of the UE. If the moving trajectory of the UE indicates that the UE does not traverse another cell, and the mobility of the UE is low mobility, the anchor base station may consider that the UE does not move out of the current serving base station for short time, so that it may be considered that the anchor base station does not need to perform anchor migration. Conversely, if the moving trajectory of the UE indicates that the UE traverses many other cells, and the mobility of the UE is high mobility, it may be considered that the anchor base station needs to perform anchor migration. It should be understood that if the UE rarely moves, the UE may still stably communicate with a network even if the anchor base station does not migrate to the serving base station, and no anchor migration may save communication resources.

For another example, the assistance information of the UE may also include information such as the duration of the SDT traffic, the maximum latency allowed for scheduling data, and the amount of data to be sent during the SDT session. A longer duration of the SDT traffic, a shorter maximum latency allowed for scheduling data and a larger amount of data to be sent during the SDT session indicate that it may be considered that the anchor base station need to perform anchor migration. Conversely, it may be considered that the anchor base station does not need to perform anchor migration. It should be understood that if the maximum latency allowed for scheduling data is short, performing anchor migration may shorten a latency for the UE to transmit data with the anchor base station, to satisfy a latency requirement for scheduling the data. In addition, when the duration of the SDT traffic is long and the amount of data to be sent during the SDT session is large, performing anchor migration can avoid that the SDT occupies excessive resources of the original anchor base station.

In the embodiment of this application, the anchor base station may determine, based on the assistance information of the UE, whether to perform anchor migration. In comparison with a scheme of performing anchor migration by default, the scheme of this application may be determined based on an actual requirement, and signaling resources may be saved, to avoid a waste of signaling resources caused without necessity by performing anchor migration.

It should be noted that, the anchor base station determining whether to perform anchor migration may be based on, but not limited to, the assistance information of the UE, for example, the anchor base station may also determine whether to perform anchor migration with reference to a load situation of the anchor base station. In addition, the anchor base station may perform determining based on one or more parameters in the assistance information of the UE.

In this embodiment of this application, the anchor migration refers to migration of an anchor of the base station to the serving base station, so that the serving base station of the UE also acts as the anchor base station of the UE, that is, the serving base station and the anchor base station are the same base station.

Optionally, the anchor base station may also determine, based on the assistance information of the UE, whether to recommend the UE to switch to an RRC connected state. In one possible implementation, the anchor base station may determine, based on parameters such as the transmitted data amount and the duration of the data transmission, whether the UE switches to the RRC connected state. For example, the assistance information of the UE may also include information such as the duration of the SDT traffic and the amount of data to be sent during the SDT session. If a longer duration of the SDT traffic and a larger amount of data to be sent during the SDT session indicate that it may be considered that the anchor base station needs to switch the UE to the RRC connected state. It should be understood that an SDT technology enables the UE to transmit the data in an RRC inactive state to avoid a waste of communication resources due to frequent switching of the UE between the RRC inactive state and the RRC connected state. If the amount of data to be sent by the UE is large and transmission time is long, there is no need to transmit in the RRC inactive state, so that the anchor base station may recommend the UE to switch to the RRC connected state.

Step 804: The anchor base station sends a retrieve context response message to the serving base station.

It should be noted that, the embodiment shown in FIG. 8 is illustrated by using performing anchor migration as an example. Based on this embodiment, the retrieve context response message may include: full context of the UE and the assistance information of the UE. It should be understood that because the full context of the UE and the assistance information of the UE are reserved by the anchor base station and the anchor base station is about to migrate to the serving base station, and the anchor base station may send the full context of the UE and the assistance information of the UE to the serving base station. The full context of the UE and the assistance information of the UE may subsequently be used to communicate with the UE by the serving base station, for example, may assist the serving base station in setting up an SDT session and performing SDT transmission.

Optionally, the retrieve context response message may include indication information indicating whether to perform anchor migration.

Optionally, the retrieve context response message may also include indication information of whether to recommend the UE to resume to the RRC connected state.

Step 805: The serving base station sends a path switch request message to an AMF and receives a path switch response message from the AMF for switching a path of a core network to the serving base station.

It should be noted that, the anchor migration is completed after the serving base station receives information of the full context of the UE and the path of the core network is switched to the serving base station, and the serving base station also becomes the anchor base station of the UE.

Step 806: The serving base station sends the first data packet to a UPF.

It should be noted that, after receiving the first data packet in step 801, the serving base station may temporarily store the first data packet in the serving base station. Optionally, after the anchor base station sends the information of the context to the serving base station by using the retrieve context response message, the serving base station may send the first data packet to the UPF. Optionally, an order in which steps 805 and 804 are performed is not limited in this application.

Step 807: The serving base station sends an RRC resume message to the UE.

It should be noted that, after performing step 803, the serving base station may determine, based on the assistance information of the UE, whether to switch the UE to the RRC connected state, a method in which the serving base station determines whether to switch the UE to the RRC connected state may be similar to a method in which the anchor base station determines whether to recommend the UE to resume to the RRC connected state. Details are not described herein again. Optionally, if the retrieve context response message also includes the indication information for whether to recommend that the UE resume to the RRC connected state, the serving base station may also refer to the indication information to determine whether to switch the UE to the RRC connected state.

In FIG. 8, the serving base station determining to switch the UE to the RRC connected state is illustrated. In this scenario, that the serving base station sends the RRC resume message may be for configuring the UE to switch to the RRC connected state.

The UE, after receiving the RRC resume message, may notify a higher layer of the UE: The SDT session terminates and the first data packet is sent successfully. Additionally, the UE may switch to the RRC connected state based on the RRC resume message.

Step 808: The UE sends an RRC resume completion message to the serving base station.

The UE, after switching to the RRC connected state, may send the RRC resume completion message to the serving base station to indicate that state switching of the UE is complete. Thus, the UE and the serving base station (also the anchor base station) may communicate in the RRC connected state.

It can be learned from steps 801 to 808 described above, that the embodiment shown in FIG. 8 is a scenario where the anchor base station determines to perform anchor migration and the serving base station determines to switch the UE to the RRC connected state.

Optionally, when the anchor base station determines to perform anchor migration, the UE may not need to switch to the RRC connected state. For example, continuing with an example in which an access network device is a base station and a terminal device is UE, FIG. 9 is a flowchart of another communication method according to an embodiment of this application. As shown in FIG. 9, the communication method may include the following steps:

Step 901: UE sends an RRC resume request, assistance information of the UE and a first data packet to a serving base station.

Step 902: The serving base station sends a retrieve context request message to an anchor base station, where the retrieve context request message is for requesting to set up an SDT session.

Step 903: The anchor base station determines whether to perform anchor migration.

Step 904: The anchor base station sends a retrieve context response message to the serving base station.

Step 905: The serving base station sends a path switch request message to an AMF and receives a path switch response message from the AMF for switching a path of a core network to the serving base station.

Step 906: The serving base station sends the first data packet to a UPF.

It should be noted that, for steps 901 to 906, refer to steps 801 to 806. Details are not described herein again.

It should be noted that, in the embodiment shown in FIG. 9, the serving base station, after receiving the retrieve context response message, may determine that there is no need to switch the UE to an RRC connected state. In this case, the UE may continue to communicate with the serving base station in an RRC inactive state and may continue to transmit data by using the SDT session. During subsequent data transmission, the serving base station is the anchor base station of the UE.

Step 907: Perform subsequent data transmission between the UE and the UPF through the serving base station.

Step 908: The serving base station sends an RRC release message to the UE, where the RRC release message is for terminating the SDT session.

The serving base station may determine to terminate the SDT session based on some determining conditions, for example, when a duration of SDT traffic ends, or when SDT data transmission is completed, the serving base station may determine to terminate the SDT session.

Optionally, the RRC release message may configure the UE to continue maintaining the RRC inactive state, or configure the UE to enter an RRC idle state.

As can be learned from the above steps 901 to 908, in this embodiment of this application, the UE may not need to switch to the RRC connected state even if the anchor base station determines to perform anchor migration.

It should be noted that, in this embodiment of this application, there is a limit to a size or number of data packets sent by the UE by using the SDT session.

A first possible implementation is as follows. The UE triggers SDT when the size of the data packet is less than a first threshold. The data packet may be considered the first data packet transmitted by using the SDT session (for example, the first data packet in the embodiments shown in FIG. 8 or FIG. 9). Additionally, a size of a data packet subsequently sent by the UE by using the SDT session should be less than the first threshold.

Optionally, after the UE triggers the SDT, if the size of the data packet to be subsequently transmitted exceeds the first threshold, the UE can notify an anchor access network device to terminate the SDT session and/or request the anchor access network device to configure the UE to switch to the RRC connected state.

In a second possible implementation, the UE triggers the SDT when the size of the data packet is less than the first threshold. The data packet may be considered the first data packet transmitted by using the SDT session (for example, the first data packet in the embodiments shown in FIG. 8 or FIG. 9). Additionally, the size of the data packet subsequently sent by the UE by using the SDT session is not limited. However, there is a limit to a number of data packets subsequently sent by the UE by using the SDT session, for example, the number is limited to a second threshold.

Optionally, after the UE triggers the SDT, if the number of data packets sent by the UE reaches the second threshold, when the data packet to be subsequently sent arrives, the UE can notify the anchor access network device to terminate the SDT session and/or request the anchor access network device to configure the UE to switch to the RRC connected state.

Optionally, each time the UE sends the data packet, the UE may determine that the data packet transmission is successful after receiving feedback at a layer 1 or a layer 2. In this case, the UE may increment a counter by 1. The UE can meter the number of data packets sent in this manner.

In this embodiment of this application, the UE can notify the anchor access network device to terminate the SDT session and/or request the anchor access network device to configure the UE to switch to the RRC connected state by using an RRC message (such as the RRC resume request message), a MAC control element (MAC control element, MAC CE), or a dedicated control channel (dedicated control channel, DCCH).

In this embodiment of this application, the data packet transmitted through the SDT may be a PDCP SDU, an RLC SDU, or a MAC SDU. An SDU refers to service data unit (service data unit), a PDCP refers to packet data convergence protocol (packet data convergence protocol), and RLC refers to radio link control (radio link control).

Optionally, during data transmission by using the SDT session, if uplink data belonging to a non-SDT bearer arrives in the UE, the UE may notify a network device of the case by using a dedicated DCCH message or an RRC resume request message. In this case, for example, the RRC resume request message sent by the UE may carry a new cause value, for example, the cause value in the RRC resume request message may be: non-SDT data arrival (non-SDT data arrival).

Optionally, when downlink data belonging to the non-SDT bearer arrives in the anchor base station during the data transmission by using the SDT session, the anchor base station may indicate the UE to switch to the RRC connected state before sending the downlink data of the non-SDT bearer. Alternatively, the anchor base station may directly terminate the SDT session, the UE may send an RRC resume request message flow to request to switch to the RRC connected state, and then the anchor base station sends the downlink data of the non-SDT bearer to the UE. Optionally, that the anchor base station directly terminates the SDT session may be complemented by using the RRC release message, where the RRC release message may carry a random access channel (random access channel, RACH) resource or configure an uplink resource. The method may enable fast access to a network by using a 2-step (2-step) RACH after the UE subsequently sends the RRC resume request message, thereby fast switching to the RRC connected state.

Optionally, after the UE triggers the SDT, if the uplink resource cannot accommodate a size of a first transmitted piece of uplink data (for example, first data sent by the UE and the assistance information of the UE) or signaling (for example, the RRC resume request), the first piece of uplink data or signaling may be segmented for transmission. Optionally, the RRC resume request is not allowed to be fragmented for transmission.

Optionally, when the first piece of uplink data or signaling is sent, the UE needs to receive explicit feedback (for example, feedback at a layer 1 or a layer 2) before the UE can continue to send subsequent data or signaling. For example, when a first message or first signaling is sent on a configured resource (configured grant, CG), the UE cannot send subsequent data and signaling on the CG if the UE does not receive explicit feedback of the first message, even if the subsequent data or signaling arrives in a buffer of the UE.

Optionally, the explicit feedback of the first message may be that the base station schedules uplink and downlink data with a cell-radio network temporary identifier (cell-radio network temporary identifier, C-RNTI) of the UE for feedback, or may be an explicit contention resolution feedback message (for example, a Msg4 message in a RACH procedure, where the Msg4 message carries a contention resolution identifier).

Optionally, the UE may not access the network when the UE obtains the first data packet and triggers the SDT. In this case, the UE may request the uplink resource for transmitting SDT traffic data from the serving base station during a random access network.

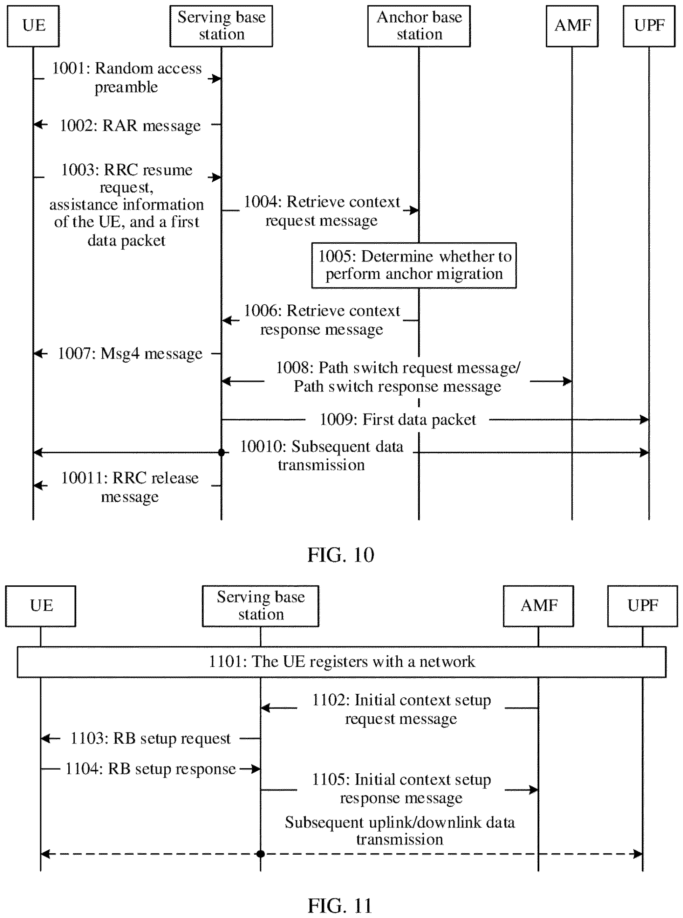

In the following, an example is used in which the UE does not access the network and the feedback message is the Msg4 message. The embodiment of this application further provides a communication method, as shown in FIG. 10, and the communication method may include the following steps:
Step 1001: UE sends a random access preamble to a serving base station.

The random access preamble refers to preamble (preamble) code.

In the embodiment shown in FIG. 10, before step 1001, the UE may not access the serving base station of a current cell, so that the UE sends the random access preamble to the serving base station for requesting access to a network.

Step 1001 may be performed after the UE triggers SDT, and the UE may trigger the SDT after obtaining a first data packet. For the triggering of the SDT and related descriptions of the first data packet, refer to descriptions in the embodiments shown in FIG. 8 and FIG. 9. Details are not described herein again. Thus, the random access preamble sent by the UE to the serving base station may also be for requesting to transmit an uplink resource of SDT traffic data (such as the first data packet obtained by the UE).

Step 1002: The serving base station sends a random access response (random access response, RAR) message to the UE.

The RAR message indicates the UE to successful access the network. Additionally, the RAR message may carry the uplink resource for transmitting the SDT traffic data. In this embodiment of this application, the uplink resource may be for transmitting a first message sent by the UE after the UE triggers the SDT, such as a message encapsulated by an RRC resume request, assistance information of the UE, and the first data packet.

Step 1003: The UE sends the RRC resume request, the assistance information of the UE and the first data packet to a serving base station.

For step 1003, refer to the descriptions of the foregoing step 901. Details are not described herein again.

It should be noted that, in the embodiment shown in FIG. 10, the UE, after sending the RRC resume request, may start a RACH contention resolution timer (ra-ContentionResolutionTimer). The UE may monitor a feedback message in time of the timer, and the feedback message is a feedback message including the RRC resume request, the assistance information of the UE and the first data packet.

In this embodiment of this application, when the serving base station of the UE is not an anchor base station of the UE, a duration of the RACH contention resolution timer may be greater than a default duration. The default duration refers to the duration of the RACH contention resolution timer when the serving base station of the UE is the same as the anchor base station. It should be understood that when the serving base station of the UE is not the anchor base station of the UE, the serving base station needs to obtain full or partial context of the UE before the contention resolution identifier may be sent. In this scenario, an anchor of the base station may migrate and signaling overhead may take a particular duration. This application extends the duration of the RACH contention resolution timer when the serving base station of the UE is not the anchor base station of the UE, so that contention resolution timer timeout can be avoided.

In one possible implementation, in an SDT scenario, when the serving base station of the UE is not the anchor base station of the UE, the duration of the RACH contention resolution timer of the UE may be automatically extended by k times. k may be configured by the network, or determined by default according to a protocol. For example, an initial duration of the RACH contention resolution timer may be configured as one of {sf8, sf 16, sf24, sf32, sf40, sf48, sf56, sf64}, and assuming the duration of the RACH contention resolution timer is sf48 and k is 2, an extended duration of the RACH contention resolution timer should be sf96.

Step 1004: The serving base station sends a retrieve context request message to the anchor base station, where the retrieve context request message is for requesting to set up an SDT session.

Step 1005: The anchor base station determines whether to perform anchor migration.

Step 1006: The anchor base station sends a retrieve context response message to the serving base station.

For step 1004 to step 1006, refer to the related descriptions of step 902 to step 904. Details are not described herein again.

Step 1007: The serving base station sends a Msg4 message to the UE, where the Msg4 message carries a contention resolution identifier.

The UE, after receiving the Msg4 message, may determine that the RRC resume request, the assistance information of the UE, and the first data packet are successfully sent.

Step 1008: The serving base station sends a path switch request message to an AMF and receives a path switch response message from the AMF for switching a path of a core network to the serving base station.

Step 1009: The serving base station sends the first data packet to a UPF.

Step 10010: Perform subsequent data transmission between the UE and the UPF through the serving base station.

Step 10011: The serving base station sends an RRC release message to the UE, where the RRC release message is for terminating the SDT session.

For step 1008 to step 10011, refer to the related descriptions of step 905 to step 908.

### Details are not described herein again.

It should be noted that, the access of the UE to the network by using a random access procedure, starting the contention resolution timer, and receiving a contention resolution feedback message are not limited to a scenario shown in FIG. 10 in which the anchor migration is performed, and the UE does not switch to the RRC connected state. For example, in the scenario shown in FIG. 8, steps 1001 and 1002 may also be performed before step 801; after step 801 is performed, the contention resolution timer may also be started; and after step 803 is performed, step 1006 may also be performed.

In one possible embodiment, an example is used in which an access network device is a base station and a terminal device is UE, and a method of setting up a radio bearer is provided. FIG. 11 shows a flow of setting up the radio bearer, and as shown in FIG. 11, the method of setting up the radio bearer may include the following steps:
Step 1101: UE registers with a network.

The UE may register with the network after powering on, and during the registration, the UE may interact with an anchor base station and a core network device (such as an AMF) with a related capability, such as a capability possessed by the UE to transmit in an RRC inactive state.

It should be noted that, when the UE registers with the network after powering on, a serving base station of the UE is also the anchor base station at the same time.

Step 1102: The AMF sends an initial context setup request (initial context setup request) message to the anchor base station.

The initial context setup request message may be for requesting the anchor base station to set up a radio bearer resource.

Optionally, the initial context setup request message may include a core network (core network, CN) assisted parameter (CN assisted parameters), where the core network assisted parameter may be for assisting the anchor base station in setting up the radio bearer and in assisting the anchor base station in communication with the UE.

Optionally, the core network assisted parameter may include at least one of the following: an indication of whether to allow that the terminal device sends or receives data in an RRC inactive state, whether to allow that the terminal device selects network slice information to send data in the RRC inactive state, a period of the RRC inactive state of the terminal device, time for which an SDT session lasts, a duration for which the terminal device sends a data packet in the RRC inactive state, an interval for which the terminal device sends or receives a data packet in the RRC inactive state, a time interval for which the SDT session is set up, a number and sizes of data packets sent during the SDT session, a number and sizes of data packets sent by the terminal device in the RRC inactive state, a moving trajectory of the terminal device in the RRC inactive state, a number of cells traversed by the terminal device when sending data in the RRC inactive state, a moving speed of the terminal device when sending data in the RRC inactive state, or an identifier of an SDT bearer.

Optionally, the core network assisted parameter may be data that is collected by the core network device or may be data that is statically subscribed to. If the core network assisted parameter is the data that is collected by the core network device, the parameter may be periodically refreshed by the core network device. After the core network device refreshes the parameter, the core network device may send a refreshed parameter to the anchor base station, so that the anchor base station updates the parameter in time. If the core network assisted parameter is the data that is statically subscribed to, after the subscribed data is updated (that is, after the parameter is updated), the core network device may send an updated parameter to the anchor base station.

Optionally, the core network assisted parameter may be stored in the AMF, or in an entity of the AMF. For example, the data that is statically subscribed to may be stored in a subscription database, where the subscription database may be located in the AMF or in the entity of the AMF.

Optionally, the anchor base station, after receiving the initial context setup request message, may set up initial context and set up the radio bearer on a network side. In addition, the anchor base station may also configure the radio bearer based on the core network assisted parameter, for example, may identify one bearer as the SDT bearer, or whether data of one bearer is allowed to be transmitted in the RRC inactive state, or whether one bearer is allowed to receive data in the RRC inactive state.

Optionally, an indication of whether the terminal device is allowed to transmit or receive the data in the RRC inactive state is not included in the core network assisted parameter, where the indication is carried directly in the initial context setup request message.

Step 1103: The anchor base station sends a radio bearer setup request (RB setup request) message to the UE.

The radio bearer setup request is for requesting the UE to set up a radio bearer on a user side. The radio bearer setup request may also include the core network assisted parameter, where the parameter is for assisting the UE in setting up the radio bearer.

Step 1104: The UE sends a radio bearer setup response (RB setup response) message to the anchor base station.

The radio bearer setup response message is a response message of the radio bearer setup request message, where the radio bearer setup response message may indicate that the UE completes setting up of the radio bearer.

Step 1105: The anchor base station sends an initial context setup response message to the AMF.

The initial context setup response message is a response message of the initial context setup request message, and may indicate that the UE and the anchor base station complete the setting up of the radio bearer.

It should be noted that, after step 1101 to step 1105 are performed, the setting up of the radio bearers on both the user side and the network side is completed, and the subsequent UE and UPF can transmit uplink or downlink data through the anchor base station.

It should be noted that, FIG. 11 illustrates an example in which the core network assisted parameter is carried in the initial context setup request message. Optionally, the core network assisted parameter may also be sent by the AMF to the anchor base station by using another message during the setting up of the radio bearer. In addition, FIG. 11 illustrates the AMF as an example. Optionally, a network element for sending the core network assisted parameter may be another network element. Based on different communication networks, network elements for sending the core network assisted parameter may be different, for example, an access and mobility management function network element in the communication network. This is not limited in the embodiment of this application.

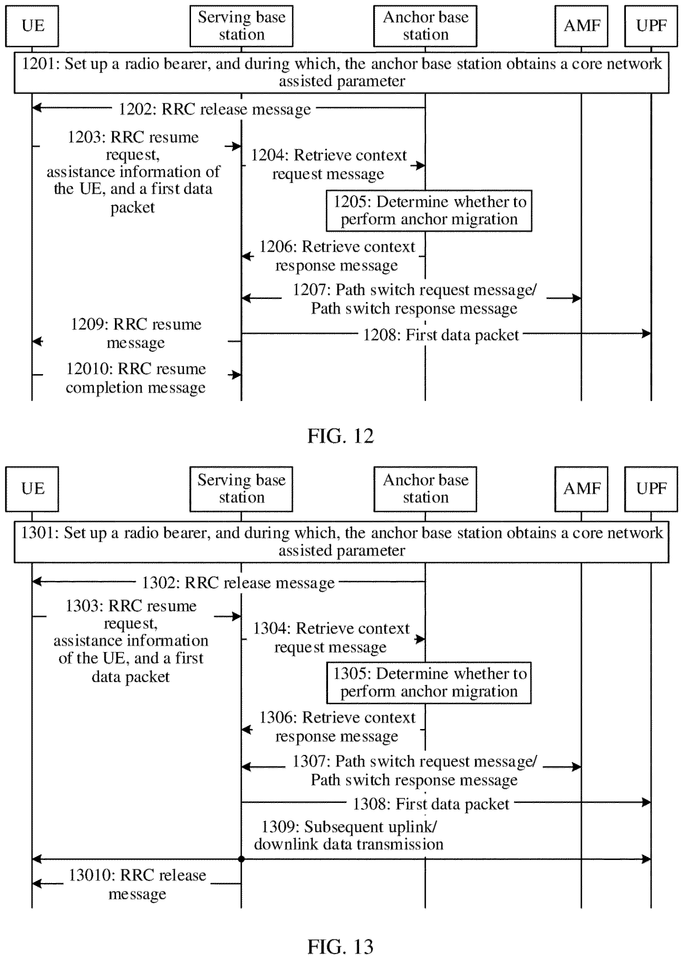

In one possible embodiment, an example is used in which an access network device is a base station and a terminal device is UE, and still another communication method is provided. FIG. 12 is a flowchart of the communication method, and as shown in FIG. 12, the communication method may include the following steps:

Step 1201: Set up a radio bearer, and during which, an anchor base station obtains a core network assisted parameter.

It should be noted that, a flow for UE and a base station to set up the radio bearer may refer to the embodiment shown in FIG. 11. According to the embodiment shown in FIG. 11, the anchor base station may receive the core network assisted parameter sent by an AMF during the setting up of the radio bearer. In the embodiment shown in FIG. 12, the core network assisted parameter may be for determining whether to perform anchor migration.

Step 1202: The anchor base station sends an RRC release message to the UE, where the RRC release message be for configuring the UE to enter an RRC inactive state.

Step 1203: The UE sends an RRC resume request, assistance information of the UE and a first data packet to a serving base station.

Step 1204: The serving base station sends a retrieve context request message to the anchor base station, where the retrieve context request message is for requesting to set up an SDT session.

For the implementation of steps 1203 and 1204, refer to the descriptions of steps 801 and 802. Details are not described herein again.

Step 1205: The anchor base station determines whether to perform anchor migration.

It should be noted that, the implementation in which the anchor base station determines whether to perform anchor migration in step 1205 is different from that in step 803. A difference compared to the embodiment shown in FIG. 8 is that: The anchor base station may also determine, based on the core network assisted parameter, whether to perform anchor migration. It should be understood that a manner of determining whether to perform anchor migration based on the core network assisted parameter is similar to the manner of determining whether to perform anchor migration based on the assistance information of the UE in step 801. Details are not described herein again.

It should be noted that, in the embodiment shown in FIG. 12, an example is used in which the anchor base station determines to perform anchor migration for description.

Step 1206: The anchor base station sends a retrieve context response message to the serving base station.

The implementation of step 1206 is similar to step 804, and refer to the descriptions of step 804. It should be noted that, a difference compared to the embodiment shown in FIG. 8 is that: The retrieve context response message may also include at least part of core network assisted parameters.

Step 1207: The serving base station sends a path switch request message to the AMF and receives a path switch response message from the AMF for switching a path of a core network to the serving base station.

Step 1208: The serving base station sends the first data packet to a UPF.

Step 1209: The serving base station sends an RRC resume message to the UE.

Step 12010: The UE sends an RRC resume completion message to the serving base station.

For the implementation of steps 1207 to 12010, refer to steps 805 to 808. Details are not described herein again.

In one possible embodiment, an example is used in which an access network device is a base station and a terminal device is UE, and still another communication method is provided. FIG. 13 is a flowchart of the communication method, and as shown in FIG. 13, the communication method may include the following steps:

Step 1301: Set up a radio bearer, and during which, an anchor base station obtains a core network assisted parameter.

Step 1302: The anchor base station sends an RRC release message to UE, where the RRC release message be for configuring the UE to enter an RRC inactive state.

Step 1303: The UE sends an RRC resume request, assistance information of the UE and a first data packet to a serving base station.

Step 1304: The serving base station sends a retrieve context request message to the anchor base station, where the retrieve context request message is for requesting to set up an SDT session.

Step 1305: The anchor base station determines whether to perform anchor migration.

Step 1306: The anchor base station sends a retrieve context response message to the serving base station.

Step 1307: The serving base station sends a path switch request message to an AMF and receives a path switch response message from the AMF for switching a path of a core network to the serving base station.

Step 1308: The serving base station sends the first data packet to a UPF.

The implementation of steps 1301 to 1308 is similar to steps 1201 to 1208, and refer to steps 1201 to 1208.

Step 1309: Perform subsequent data transmission between the UE and the UPF through the serving base station.

Step 13010: The serving base station sends an RRC release message to the UE, where the RRC release message is for terminating the SDT session.

The implementation of steps 1309 and 13010 is similar to steps 907 and 908, and refer to steps 907 and 908.

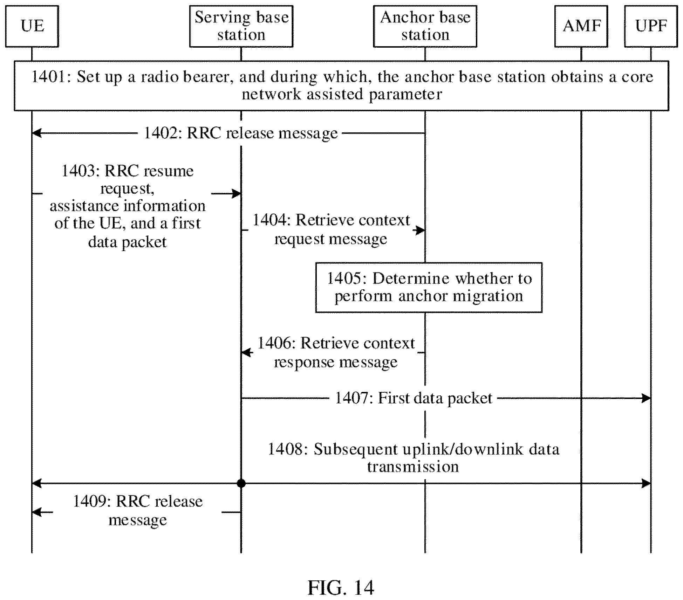

In one possible embodiment, an example is used in which an access network device is a base station and a terminal device is UE. As shown in FIG. 14, an embodiment of this application provides yet another communication method, and the communication method may include the following steps:

Step 1401: Set up a radio bearer, and during which, an anchor base station obtains a core network assisted parameter.

Step 1402: The anchor base station sends an RRC release message to UE, where the RRC release message be for configuring the UE to enter an RRC inactive state.

Step 1403: The UE sends an RRC resume request, assistance information of the UE and a first data packet to a serving base station.

Step 1404: The serving base station sends a retrieve context request message to the anchor base station, where the retrieve context request message is for requesting to set up an SDT session.

The implementation of steps 1401 to 1404 is similar to steps 1201 to 1205, and refer to descriptions of steps 1201 to 1204.

Step 1405: The anchor base station determines whether to perform anchor migration.

It should be noted that, the implementation in which the anchor base station determines whether to perform anchor migration is the same manner as in step 1305. However, in the embodiment shown in FIG. 14, an example is used for description in which the anchor base station determines not to perform anchor migration.

Step 1406: The anchor base station sends a retrieve context response message to the serving base station.

Content of the retrieve context response message in the embodiment shown in FIG. 14 is different from content of the retrieve context response message in the embodiment shown in FIG. 12, since the anchor base station determines not to perform anchor migration.

In the embodiment shown in FIG. 14, the retrieve context response message may include: partial context of the UE, configuration information of SDT, a QoS-related parameter, and the like. For example, the partial content of the UE may include a PDU session list of the UE, or a DRX configuration parameter of the UE during SDT. The configuration information of the SDT may include a configuration of the SDT session at an RLC layer, and the QoS-related parameter may include a QoS parameter of an SDT bearer.

Step 1407: The serving base station sends the first data packet to a UPF.

Step 1408: Perform subsequent data transmission between the UE and the UPF through the serving base station.

Step 1409: The serving base station sends the RRC release message to the UE, where the RRC release message is for terminating the SDT session.

The implementation of steps 1407 to 1409 is similar to steps 1307 to 1309, and refer to descriptions of steps 1307 to 1309.

It should be noted that, the embodiments shown in FIG. 8 to FIG. 14 above are exemplary descriptions of the several communication methods provided in this application.

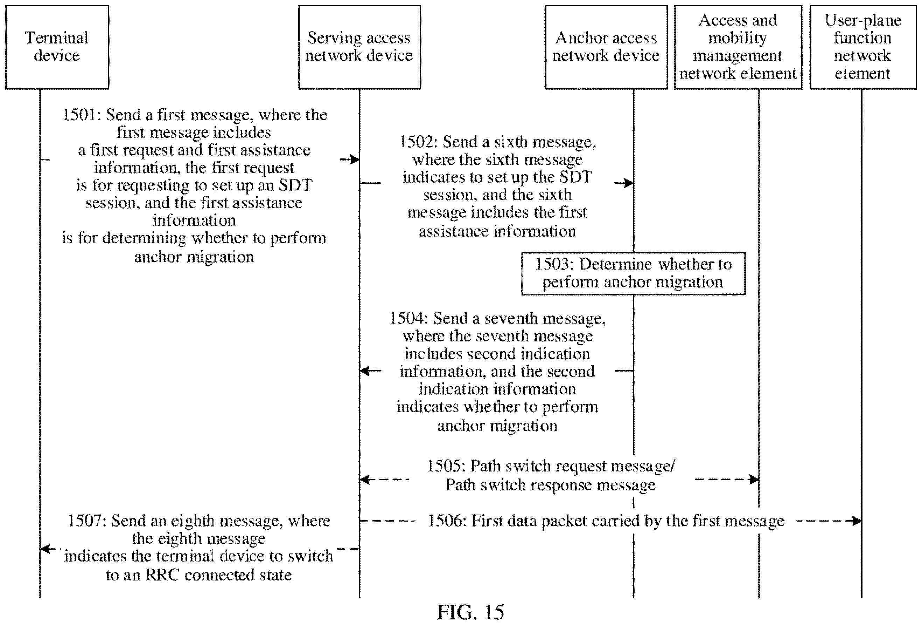

To sum up, an embodiment of this application discloses a communication method. As shown in FIG. 15, the method includes the following steps:

Step 1501: A terminal device sends a first message to a serving access network device. The first message includes a first request and first assistance information, where the first request is for requesting to set up an SDT session, and the first assistance information is for determining whether to perform anchor migration.

In the embodiment of this application, step 1501 is performed after the terminal device triggers SDT, where triggering the SDT refers to the terminal device determining to perform SDT.

In one possible implementation, the first request may be the RRC resume request in the embodiments shown in FIG. 8 to FIG. 10 and FIG. 12 to FIG. 14, and the first request may refer to the related descriptions of the RRC resume request in the embodiments shown in FIG. 8 to FIG. 10 and FIG. 12 to FIG. 14. The first request is for requesting that the set-up SDT session may be for transmission of SDT traffic.

The first assistance information may be for assisting an anchor access network device in determining whether to perform anchor migration. Optionally, the first assistance information includes at least one of the following: a duration of the SDT traffic, a maximum latency allowed for scheduling data, a number of times for which the terminal device expects to continuously transmit the data in the SDT session, a time interval and a duration for which the terminal device expects to monitor scheduling information, a moving trajectory of the terminal device, mobility of the terminal device, or a total amount of data to be sent during the SDT session. The SDT session is for transmission of the SDT traffic.

Optionally, the first assistance information may also be for assisting the SDT. The first assistance information may further include at least one of the following: an indication of whether the data transmitted in the SDT session is fragmented, an amount of remaining data to be transmitted in the SDT session, information of a radio bearer, or attribute information of traffic carried by the radio bearer. The information of the radio bearer includes at least one of a type of the radio bearer and a type of the traffic carried by the radio bearer, and the attribute information of the traffic includes at least one of transmission quality information required by the traffic, a frequency at which the traffic is sent, a period at which the traffic is sent, time for which the traffic lasts, and a data amount of the traffic.

Optionally, the first assistance information may be collected by the terminal device during previous setting up of the radio bearer, or may be configured for the terminal device by a core network element (such as an access and mobility management function network element).

In one possible implementation, an example is used in which the terminal device is the UE. The first assistance information may be the assistance information of the UE in the embodiments shown in FIG. 8 to FIG. 10 and FIG. 12 to FIG. 14, and refer to the related descriptions of the assistance information of the UE in the above embodiments.

In the embodiment of this application, the SDT may be triggered by using a first data packet, and before step 1501, and the terminal device may obtain the first data packet. In one possible implementation, the first data packet may be the first data packet in the embodiments shown in FIG. 8 to FIG. 10 and FIG. 12 to FIG. 14, and refer to the relevant descriptions of the first data packet in the above embodiments. Optionally, when a size of the first data packet is less than or equal to a first threshold, the terminal device can generate a first message, where the first message can include the first data packet.

An example is used in which the terminal device is the UE. The first message generated by the terminal device may be a message including the RRC resume request, the assistance information of the UE, and the first data packet in the embodiments shown in FIG. 8 to FIG. 10 and FIG. 12 to FIG. 14.

Optionally, when sending the first message, the terminal device may start a timer, and the terminal device may monitor a response message of the first message during running of the timer. A duration of the timer is a first duration when the serving access network device is not the anchor access network device. The duration of the timer is a second duration when the serving access network device is the anchor access network device. The first duration is greater than the second duration.

In one possible implementation, the timer may be the RACH contention resolution timer in the embodiment shown in FIG. 10, and the timer and the duration of the timer may refer to the related descriptions of the RACH contention resolution timer and the duration of the RACH contention resolution timer in the embodiment shown in FIG. 10.

Optionally, the terminal device may also obtain a second data packet after sending the first message.

In one possible implementation, the terminal device may send the second data packet by using the SDT session when a size of the second data packet is less than the first threshold. If the size of the second data packet is greater than the first threshold, the terminal device may send a second message and a third message to the anchor access network device, where the second message is for requesting the anchor access network device to configure the terminal device to switch to an RRC connected state, and the third message indicates to terminate the SDT session.

In another possible implementation, the size of the second data packet may not be limited, and the terminal device may directly send the second data packet. The size of the second data packet may be less than the first threshold, may be equal to the first threshold, or may be larger than the first threshold. Optionally, without limiting the size of the second data packet, there is a limit to a number of data packets sent by using the SDT session. For example, if the number of data packets sent by using the SDT session reaches a second threshold, the terminal device may send a fourth message or a fifth message to the anchor access network device, where the fourth message is for requesting the anchor access network device to configure the terminal device to switch to the RRC connected state, and the fifth message indicates to terminate the SDT session.

Optionally, the second message, the third message, the fourth message or the fifth message may be any of the following: an RRC message, a MAC CE, or a DCCH message.

For the content of the above step 1501, refer to the descriptions of step 801, step 901, step 1003, step 1203, step 1303, or step 1403.

Step 1502: The serving access network device sends a sixth message to the anchor access network device, where the sixth message indicates to set up the SDT session, and the sixth message includes the first assistance information.

Optionally, the sixth message may include at least one of the following: an LCID of the radio bearer for transmitting the first message, a network slice information list supported by the serving access network device, or a security capability possessed by the serving access network device.

In one possible implementation, the sixth message may be the retrieve context request message in the embodiments shown in FIG. 8 to FIG. 10 and FIG. 12 to FIG. 14, and for the content of step 1502, refer to the descriptions of step 802, step 902, step 1004, step 1204, step 1304, or step 1404.

Step 1503: The anchor access network device determines whether to perform anchor migration.

In the embodiment of this application, the first assistance information may be for assisting the anchor access network device in determining whether to perform anchor migration. The anchor access network device, after receiving the sixth message, may determine, based on the first assistance information carried by the sixth message, whether to perform anchor migration.

For example, the first assistance information may include the moving trajectory of the terminal device and mobility of the terminal device. If the moving trajectory of the terminal device indicates that the terminal device does not traverse another cell, and the mobility of the terminal device is low mobility, the anchor base station may consider that the terminal device does not move out of the current serving base station for short time, so that the anchor base station may consider that there is no need to perform anchor migration. Conversely, if the moving trajectory of the terminal device indicates that the terminal device traverses many other cells, and the mobility of the terminal device is high mobility, the anchor base station may consider that the anchor migration needs to be performed. It should be understood that if the terminal device rarely moves, the terminal device may stably communicate with a network even if the anchor base station does not migrate to the serving base station, and no anchor migration may save communication resources.

For another example, the first assistance information may also include information such as the duration of the SDT traffic, the maximum latency allowed for scheduling data, and the amount of data to be sent during the SDT session. A longer duration of the SDT traffic, a shorter maximum latency allowed for scheduling data and a larger amount of data to be sent during the SDT session indicate that it may be considered that the anchor base station need to perform anchor migration. Conversely, it may be considered that the anchor base station does not need to perform anchor migration. It should be understood that if the maximum latency allowed for scheduling data is short, performing anchor migration may shorten a latency for the terminal device to transmit the data with the anchor base station, to satisfy a latency requirement for scheduling data. In addition, when the duration of the SDT traffic is long and the amount of data to be sent during the SDT session is large, performing anchor migration can avoid that the SDT occupies excessive resources of the original anchor base station.

It should be noted that, the anchor base station determining whether to perform anchor migration may be based on, but not limited to, the first assistance information, for example, the anchor base station may also determine whether to perform anchor migration with reference to a load situation of the anchor base station. In addition, the anchor base station may perform determining based on one or more parameters in the first assistance information.

Optionally, the anchor base station may also determine based on the first assistance information whether to recommend the terminal device to switch to the RRC connected state. In one possible implementation, the anchor base station may determine, based on parameters such as the transmitted data amount and a duration of data transmission, whether to switch the terminal device to the RRC connected state. For example, the first assistance information may also include information such as the duration of the SDT traffic and the amount of data to be sent during the SDT session. If a longer duration of the SDT traffic and a larger amount of data to be sent during the SDT session indicate that it may be considered that the anchor base station needs the terminal device to switch to the RRC connected state. It should be understood that an SDT technology allows the terminal device to transmit the data in an RRC inactive state, to avoid a waste of communication resources due to frequent switching of the terminal device between the RRC inactive state and the RRC connected state. If the amount of data to be sent by the terminal device is large and the transmission time is long, there is no need to transmit in the RRC inactive state, so that the anchor base station may recommend the terminal device to switch to the RRC connected state.

In one possible implementation, the anchor access network device can be the anchor base station, the first assistance information can be the assistance information of the UE in the embodiments shown in FIG. 8 to FIG. 10, and FIG. 12 to FIG. 14, and for the content of step 1503, refer to the descriptions of step 803, step 903, step 1005, step 1205, step 1305, or step 1405.

Step 1504: The anchor access network device sends a seventh message to the serving access network device, where the seventh message includes second indication information, and the second indication information indicates whether to perform anchor migration.

Optionally, if the second indication information indicates the anchor migration, the seventh message may further include the first assistance information, and the first assistance information may be for: assisting the SDT, and/or assisting the anchor access network device in determining whether to switch the terminal device to the RRC connected state.

Optionally, if the second indication information indicates not to perform anchor migration, the seventh message may further include partial context of the terminal device and configuration information of the SDT session for the serving base station to set up a bearer of the SDT session with the anchor base station, thereby performing SDT. For example, the second indication information indicates not to perform the anchor migration, and refer to the relevant descriptions of step 1406.

Optionally, if the second indication information indicates to perform anchor migration, the seventh message may further include the assistance information, full context of the terminal device, and third indication information, where the full context of the terminal device is for setting up the SDT session and performing SDT, and the third indication information is for indicating whether to recommend the terminal device to switch to the RRC connected state. For example, the second indication information indicates to perform anchor migration, and refer to the relevant descriptions of step 804, step 904, step 1006, step 1206 or step 1306.

In one possible implementation, the seventh message may be the retrieve context response message in the embodiments shown in FIG. 8 to FIG. 10 and FIG. 12 to FIG. 14, and for the content of step 1504, refer to the descriptions of step 804, step 904, step 1006, step 1206, step 1306, or step 1406.

Optionally, an example is used in which the second indication information indicates to perform anchor migration, and the communication method may further include: Step 1505: The serving access network device sends a path switch request to an access and mobility management network element and receives a path switch response from the access and mobility management network element. The core network can thus be switched to the serving access network device. In one possible implementation, for step 1505, refer to the descriptions of step 805, step 905, step 1008, step 1207, or step 1307.

Optionally, if the first message includes the first data packet, the communication method may further include: Step 1506: The serving access network device sends the first data packet to a user-plane function network element. In one possible implementation, for step 1506, refer to the descriptions of step 806, step 906, step 1009, step 1208, step 1308, or step 1407.

Optionally, the serving access network device may also determine, based on the first assistance information and/or the third indication information, whether to switch the terminal device to the RRC connected state. The manner of determining whether to switch the terminal device to the RRC connected state is similar to the manner of determining whether to perform anchor migration.

An example is used in which the serving access network device determines to switch the terminal device to the RRC connected state, and the communication method may further include: Step 1506: The serving access network device sends an eighth message to the terminal device, and the eighth message indicates the terminal device to switch to the RRC connected state. In one possible implementation, the eighth message can be the RRC resume completion message in the embodiment shown in FIG. 8 or FIG. 12, and for step 1507, refer to the descriptions of step 807 or step 1209.

It should be noted that, for the embodiment shown in FIG. 15, refer to the related descriptions of the embodiment in FIG. 8.

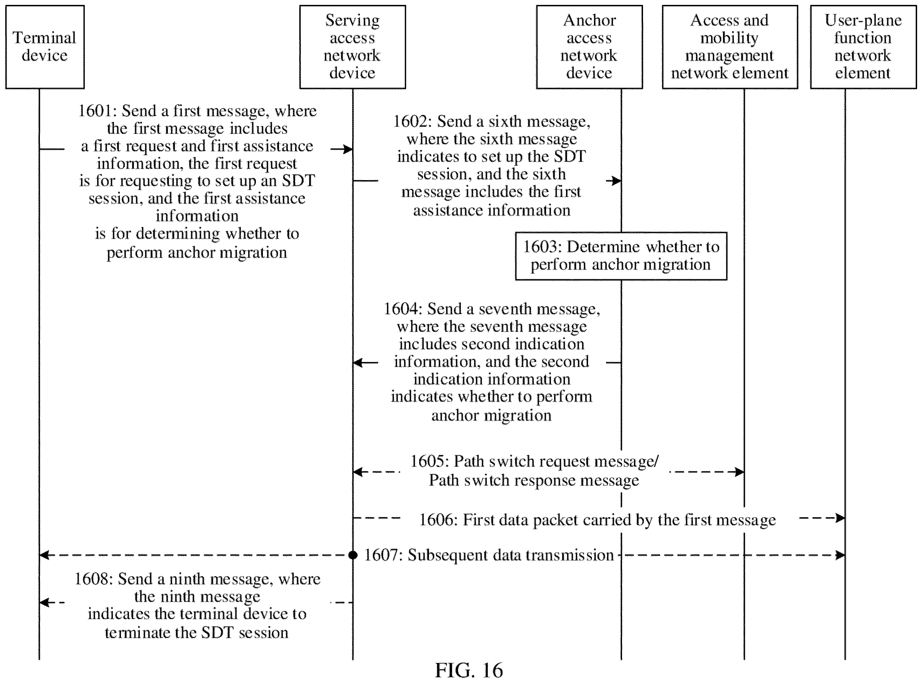

Additionally, an embodiment of this application further discloses a communication method, and as shown in FIG. 16, the method includes the following steps:

Step 1601: A terminal device sends a first message to a serving access network device. The first message includes a first request and first assistance information, where the first request is for requesting to set up an SDT session, and the first assistance information is for determining whether to perform anchor migration.

Step 1602: The serving access network device sends a sixth message to an anchor access network device, where the sixth message indicates to set up the SDT session, and the sixth message includes the first assistance information.

Step 1603: The anchor access network device determines whether to perform anchor migration.

Step 1604: The anchor access network device sends a seventh message to the serving access network device, where the seventh message includes second indication information, and the second indication information indicates whether to perform anchor migration.

Optionally, the communication method may further include: Step 1605: The serving access network device sends a path switch request to an access and mobility management network element and receives a path switch response from the access and mobility management network element.

Optionally, the communication method may further include: Step 1606: The serving access network device sends a first data packet to a user-plane function network element.

Step 1601 to step 1606 are the same as step 1501 to step 1506, and details are not described herein again.

Optionally, an example is used in which the serving access network device determines that there is no need to switch the terminal device to an RRC connected state, and the communication method may further include: Step 1607: The terminal device performs subsequent data transmission with the user-plane function network element. Step 1608: The serving access network device sends a ninth message to the terminal device, where the ninth message is for indicating the terminal device to terminate the SDT session. In one possible implementation, the terminal device can be UE, and the ninth message can be an RRC release message. For step 1607, refer to the descriptions of step 907, step 10010, step 1309, or step 1408, and for step 1608, refer to the descriptions of step 908, step 10011, step 13010, or step 1409.

It should be noted that, the embodiment shown in FIG. 16 can refer to the embodiment shown in FIG. 9.

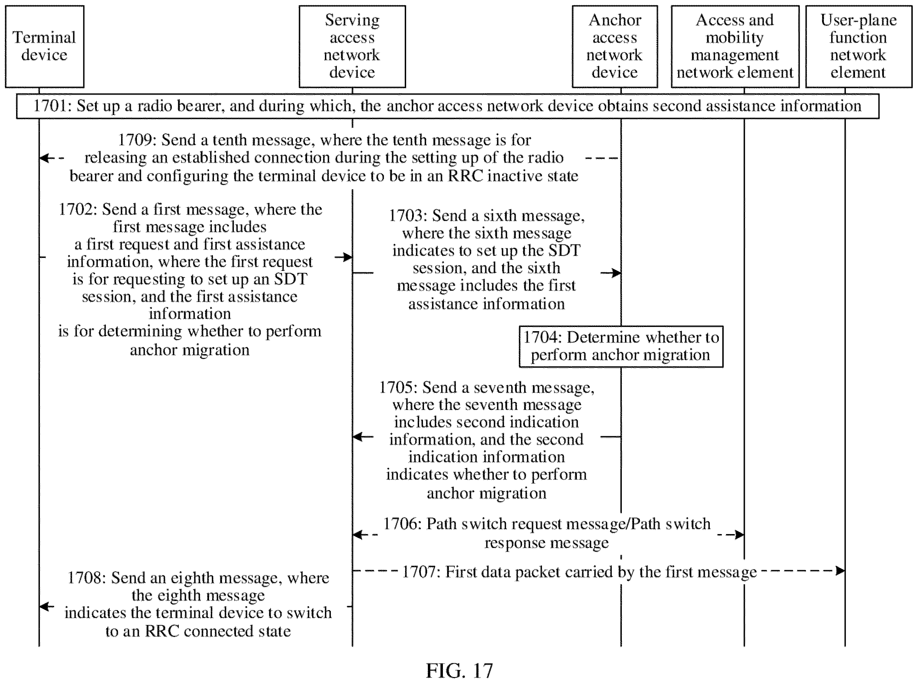

Additionally, an embodiment of this application further discloses a communication method, and as shown in FIG. 17, the method includes the following steps:

Step 1701: Set up a radio bearer, and during which, an anchor access network device obtains second assistance information.

The second assistance information is sent by a core network device to the anchor access network device during the setting up of the radio bearer. In one possible implementation, the core network device may be an access and mobility management function network element, for example, an AMF.

Optionally, the second assistance information may include at least one of the following: an indication of whether to allow that a terminal device sends or receives data in an RRC inactive state, whether to allow that the terminal device selects network slice information to send data in the RRC inactive state, a period of the RRC inactive state of the terminal device, time for which an SDT session lasts, a duration for which the terminal device sends a data packet in the RRC inactive state, an interval for which the terminal device sends or receives a data packet in the RRC inactive state, a time interval for which the SDT session is set up, a number and sizes of data packets transmitted during the SDT session, a number and sizes of data packets sent by the terminal device in the RRC inactive state, a moving trajectory of the terminal device in the RRC inactive state, a number of cells traversed by the terminal device when sending data in the RRC inactive state, a moving speed of the terminal device when sending data in the RRC inactive state, or an identifier of an SDT bearer.

In one possible implementation, the second assistance information may be a core network assisted parameter obtained during the anchor base station setting up the radio bearer in the embodiments shown in FIG. 11 to FIG. 14. Content of the second assistance information may refer to the relevant descriptions of the core network assisted parameter in step 1102.

Step 1702: The terminal device sends a first message to a serving access network device. The first message includes a first request and first assistance information, where the first request is for requesting to set up the SDT session, and the first assistance information is for determining whether to perform anchor migration.

Step 1703: The serving access network device sends a sixth message to the anchor access network device, where the sixth message indicates to set up the SDT session, and the sixth message includes the first assistance information.

Step 1704: The anchor access network device determines whether to perform anchor migration.

It should be noted that, in step 1704, the anchor access network device may determine, based on the first assistance information and the second assistance information, whether to perform anchor migration. For step 1704, refer to the descriptions of step 1205.

Step 1705: The anchor access network device sends a seventh message to the serving access network device, where the seventh message includes second indication information, and the second indication information indicates whether to perform anchor migration.

It should be noted that, in step 1705, when it is determined to perform anchor migration, the seventh message may include the first assistance information and the second assistance information. For step 1704, refer to the descriptions of step 1206.

Optionally, the communication method may further include: Step 1706: The serving access network device sends a path switch request to an access and mobility management network element and receives a path switch response from the access and mobility management network element.

Optionally, the communication method may further include: Step 1707: The serving access network device sends a first data packet to a user-plane function network element.

Optionally, the serving access network device may determine, based on at least one of the first assistance information, the second assistance information, and third indication information, whether to switch the terminal device to an RRC connected state. The manner of determining whether to switch the terminal device to the RRC connected state is similar to the manner of determining whether to perform anchor migration.

An example is used in which the serving access network device determines to switch the terminal device to the RRC connected state, and the communication method may further include: Step 1708: The serving access network device sends an eighth message to the terminal device, and the eighth message indicates the terminal device to switch to the RRC connected state. In one possible implementation, the eighth message may be the RRC resume completion message in the embodiment shown in FIG. 8 or FIG. 12, and for step 1504, refer to the descriptions of step 807 or step 1209.

Optionally, before step 1702, the communication method may further include: Step 1709: The anchor access network device sends a tenth message to the terminal device, where the tenth message is for releasing an established connection during the setting up of the radio bearer and configuring the terminal device to be in the RRC inactive state. In one possible implementation, the tenth message may be an RRC release message. Step 1709 may refer to step 1202, step 1302, or step 1402, and details are not described herein again.

It should be noted that, the embodiment shown in FIG. 17 may refer to the related descriptions of the following embodiment in FIG. 12.

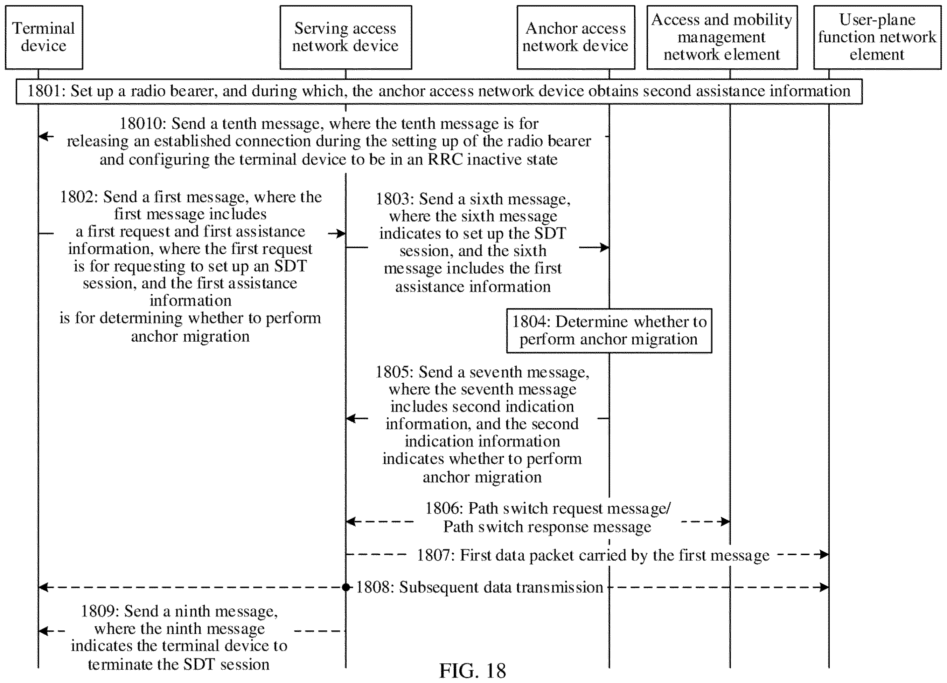

Additionally, an embodiment of this application further discloses a communication method, and as shown in FIG. 18, the method includes the following steps:

Step 1801: Set up a radio bearer, and during which, an anchor access network device obtains second assistance information.

Step 1802: A terminal device sends a first message to a serving access network device. The first message includes a first request and first assistance information, where the first request is for requesting to set up an SDT session, and the first assistance information is for determining whether to perform anchor migration.

Step 1803: The serving access network device sends a sixth message to the anchor access network device, where the sixth message indicates to set up the SDT session, and the sixth message includes the first assistance information.

Step 1804: The anchor access network device determines whether to perform anchor migration.

It should be noted that, in step 1804, the anchor access network device may determine, based on the first assistance information and the second assistance information, whether to perform anchor migration. For step 1804, refer to the descriptions of step 1205.

Step 1805: The anchor access network device sends a seventh message to the serving access network device, where the seventh message includes second indication information, and the second indication information indicates whether to perform anchor migration.

It should be noted that, in step 1805, when it is determined to perform anchor migration, the seventh message may include the first assistance information and the second assistance information. For step 1804, refer to the descriptions of step 1206.

Optionally, the communication method may further include: Step 1806: The serving access network device sends a path switch request to an access and mobility management network element and receives a path switch response from the access and mobility management network element.

Optionally, the communication method may further include: Step 1807: The serving access network device sends a first data packet to a user-plane function network element.

Optionally, an example is used in which the serving access network device determines that there is no need to switch the terminal device to an RRC connected state, and the communication method may further include: Step 1808: The terminal device performs subsequent data transmission with the user-plane function network element. Step 1809: The serving access network device sends a ninth message to the terminal device, where the ninth message indicates the terminal device to terminate the SDT session.

Optionally, before step 1802, the communication method may further include: step 18010: The anchor access network device sends a tenth message to the terminal device, where the tenth message is for releasing an established connection during the setting up of the radio bearer and configuring the terminal device to be in an RRC inactive state. In one possible implementation, the tenth message may be an RRC release message. Step 18010 may refer to step 1202, step 1302, or step 1402, and details are not described herein again.

It should be noted that, the embodiment shown in FIG. 18 may refer to the related descriptions of the embodiment in FIG. 13.

It should be noted that the above-described embodiments of this application are described in a situation in which the serving access network device (for example, the serving base station) is different from the anchor access network device (for example, the anchor base station). Optionally, the serving access network device of the terminal device may also be the anchor access network device of the terminal device. In this case, the serving access network device (also the anchor access network device) may also obtain the first assistance information (sent by the terminal device to the serving access network device) and the second assistance information (sent by the core network device to the serving access network device). The first assistance information and the second assistance information may be for the serving access network device to determine whether the terminal device needs to switch to the RRC connected state.

It should be noted that, the actions of the serving access network device in the above method embodiment may be performed by the processor 601 in the communication device 60 shown in FIG. 6 invoking application program code stored in the memory 604 to instruct the serving access network device to be executed, the actions of the anchor access network device may be performed by the processor 601 in the communication device 60 shown in FIG. 6 invoking application program code stored in the memory 604 to instruct the anchor access network device to be executed, and the actions of the terminal device may be performed by the processor 601 in the communication device 60 shown in FIG. 6 invoking application program code stored in the memory 604 to instruct the terminal device to be executed.

It may be understood that, the methods and operations implemented by a target node in the foregoing method embodiments may also be implemented by a component (for example, a chip or a circuit) that can be used in the target node.

Optionally, an embodiment of this application further provides a communication apparatus, which is configured to implement the various methods described above. The communication apparatus may be a target node in the method embodiment described above, or an apparatus including a target node described above, or a component usable in the target node. It may be understood that to implement the foregoing functions, the communication apparatus includes corresponding hardware structures and/or software modules for performing the functions. A person skilled in the art should be easily aware that, in combination with the units and algorithm steps of the examples described in the embodiments disclosed in this specification, this application can be implemented by hardware or a combination of hardware and computer software. Whether a function is performed by hardware or computer software driving hardware depends on particular applications and design constraints of the technical solutions. A person skilled in the art can use different methods to implement the described functions for each particular application, but it should not be considered that the implementation goes beyond the scope of this application.

In this embodiment, division of functional modules of the communication apparatus may be performed according to the foregoing method embodiments. For example, each functional module may be divided corresponding to each function, and two or more functions may alternatively be integrated to one module. The integrated module may be implemented in the form of hardware, or may be implemented in a form of a software functional module. It should be noted that, in embodiments of this application, the module division is an example, and is merely logical function division, and there may be other division manners during actual implementation.

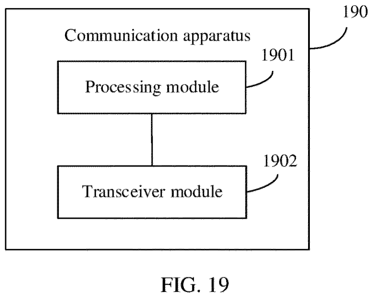

FIG. 19 is a schematic diagram of a structure of a communication apparatus 190. The communication apparatus 190 includes a processing module 1901 and a transceiver module 1902. The transceiver module 1902, which may also be referred to as a transceiver unit for completing transceiver functions, and may be, for example, a transceiver circuit, a transceiver, a transceiver, or a communication interface.

An example is used in which the communication apparatus 190 is the terminal device in the above method embodiment:

The processing module 1901 may be for generating a first message, where the first message is for setting up a small data transmission, SDT session, the first message includes first assistance information, and the first assistance information is for determining whether to perform anchor migration. The first assistance information is collected by the terminal device or configured for the terminal device by a core network device. The transceiver module 1902 may be further configured to send the first message to a serving access network device.

Optionally, the processing module 1901 may be further configured to obtain a first data packet. When generating the first message, the processing module 1901 specifically may be configured to generate the first message when a size of the first data packet is less than or equal to a first threshold, and the first message includes the first data packet.

Optionally, the processing module 1901 may be further configured to obtain a second data packet. The transceiver module 1902 may be further configured to send a second message or a third message to an anchor access network device when a size of the second data packet is greater than the first threshold, where the second message is for requesting the anchor access network device to configure the terminal device to switch to an RRC connected state, and the third message indicates to terminate the SDT session.

Optionally, the processing module 1901 may be further configured to obtain a second data packet. The processing module 1901 may be further configured to send the second data packet by using the SDT session, where a size of the second data packet is less than the first threshold, equal to the first threshold, or greater than the first threshold.

Optionally, the transceiver module 1902 may also be configured to send a fourth message or a fifth message to an anchor access network device when a number of data packets sent by using the SDT session reaches the second threshold, where the fourth message is for requesting the anchor access network device to configure the terminal device to switch to an RRC connected state, and the fifth message indicates to terminate the SDT session.

Optionally, the processing module 1901 may also be configured to start a timer when sending the first message, where a duration of the timer is a first duration when the serving access network device is not the anchor access network device; or the duration of the timer is a second duration when the serving access network device is the anchor access network device. The first duration is greater than the second duration. The processing module 1901 may also be configured to monitor a response message of the first message during running of the timer.

Optionally, second indication information indicates to perform anchor migration, and the transceiver module 1902 may be further configured to send a path switch request to a first core network device, where the path switch is for requesting the first core network device to switch a path of a core network to the serving access network device.

Optionally, the first message further includes a first data packet, and optionally, the transceiver module 1902 may also be configured to send the first data packet to a user-plane function network element.

An example is used in which the communication apparatus 190 is the serving access network device in the foregoing method embodiments.

The transceiver module 1902 may be configured to receive a first message from a terminal device, where the first message is for an SDT session, the first message includes first assistance information, and the first assistance information is for determining whether to perform anchor migration. The transceiver module 1902 may also be configured to send a sixth message to an anchor access network device, where the sixth message indicates to set up the SDT session, and the sixth message includes the first assistance information. The transceiver module 1902 may be further configured to receive a seventh message from the anchor access network device, the seventh message includes second indication information, and the second indication information indicates whether to perform anchor migration.

Optionally, the transceiver module 1902 may be further configured to send an eighth message to the terminal device, and the eighth message indicates the terminal device to switch to an RRC connected state.

Optionally, the transceiver module 1902 may be further configured to send a ninth message to the terminal device, and the ninth message indicates the terminal device to terminate the SDT session.

An example is used in which the communication apparatus 190 is the anchor access network device in the foregoing method embodiments.

The transceiver module 1902 may be configured to receive a sixth message from a serving access network device, the sixth message indicates to set up an SDT session, the sixth message includes first assistance information, and the first assistance information is for determining whether to perform anchor migration. The transceiver module 1902 may be further configured to send a seventh message to the serving access network device, the seventh message includes second indication information, and the second indication information indicates whether to perform anchor migration.

Optionally, the processing module 1901 may be configured to determine, based on the first assistance information, whether to perform anchor migration.

Optionally, the processing module 1901 may be configured to determine, based on the first assistance information, whether to recommend a terminal device to switch to an RRC connected state.

An example is used in which the communication apparatus 190 is the anchor access network device in the foregoing method embodiments.

The transceiver module 1902 may be configured to receive second assistance information from a core network device during setting up of a radio bearer, and the second assistance information is for assisting SDT, and/or for determining whether to perform anchor migration. The transceiver module 1902 may also be configured to receive a sixth message from a serving access network device, the sixth message indicates to set up an SDT session, the sixth message includes first assistance information, and the first assistance information is for determining whether to perform anchor migration. The transceiver module 1902 may be further configured to send a seventh message to the serving access network device, the seventh message includes second indication information, and the second indication information indicates whether to perform anchor migration.

Optionally, the processing module 1901 may be configured to determine, based on the first assistance information and/or the second assistance information, whether to perform anchor migration.

Optionally, the processing module 1901 may be configured to determine, based on the first assistance information and/or the second assistance information, whether to recommend a terminal device to switch to an RRC connected state.

It should be noted that, all related content of the steps in the foregoing method embodiments may be referenced to function descriptions of corresponding functional modules. Details are not described herein again. Since the communication device 190 provided by the embodiment can perform the above-described communication method, technical effects that can be obtained thereof can be referred to the above-described method embodiment. Details are not described herein again.

Alternatively, the serving access network device, the anchor access network device, or the terminal device in embodiments of this application may also be referred to as a communication apparatus, which may be a general-purpose device or a special-purpose device. This is not limited in embodiments of this application.

In this embodiment, the communication device 190 is presented in a form in which respective functional modules are divided in an integrated manner. A "module" herein may refer to a specific ASIC, a circuit, a processor and memory executing one or more software or firmware programs, an integrated logic circuit, and/or other devices that may provide the functionality described above. In a simple embodiment, it will be appreciated by a person skilled in the art that the communication apparatus 190 may take the form of the communication device 60 shown in FIG. 6.

In this embodiment of this application, the processor 601 in the communication device 60 shown in FIG. 6 may enable the communication device 60 to perform the communication method in the method embodiments by invoking computer-executed instructions stored in the memory 604.

Specifically, the functions/implementation processes of the processing module 1901 and the transceiver module 1902 in FIG. 19 may be implemented by the processor 601 in the communication device 60 shown in FIG. 6 by invoking the computer-executed instructions stored in the memory 604. Alternatively, the functions/implementation processes of the processing module 1901 in FIG. 19 may be implemented by the processor 601 in the communication device 60 shown in FIG. 6 by invoking the computer-executed instructions stored in the memory 604, and the functions/implementation processes of the transceiver module 1902 in FIG. 19 may be implemented by the communication interface 603 in the communication device 60 shown in FIG. 6.

Since the communication device 190 provided by the embodiment can perform the above-described communication method, technical effects that can be obtained thereof can be referred to the above-described method embodiments. Details are not described herein again.

It should be understood that sequence numbers of the foregoing processes do not mean execution sequences in various embodiments of this application. The execution sequences of the processes should be determined based on functions and internal logic of the processes, and should not constitute any limitation on the implementation processes of embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are executed in a mode of hardware or software depends on particular applications and design constraint conditions of the technical solutions. A person skilled in the art can use different methods to implement the described functions for each particular application, but it should not be considered that the implementation goes beyond the scope of this application.

A person skilled in the art can clearly understand that for convenience and conciseness of description, for specific working processes of the foregoing systems, apparatuses and units, refer to the corresponding processes in the foregoing method embodiments. Details are not described herein again.

In the several embodiments provided in this application, it should be understood that the disclosed system, device and method may be implemented in other manners. For example, the described device embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over a plurality of network units. Some or all of the units may be selected according to actual needs to achieve the objectives of the solutions of the embodiments.

In addition, functional units in embodiments of this application may be integrated into one processing unit, or each of the units may be physically separated, or two or more units may be integrated into one unit.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on a computer, all or some of the processes or functions according to the embodiments of this application are produced. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server or data center to another website, computer, server or data center in a wired (for example, a coaxial cable, an optical fiber or a digital subscriber line (digital subscriber line, DSL)) or wireless (for example, infrared, wireless or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (SSD)), or the like.

Terms such as "component", "module", and "system" used in this application are generally intended to refer to computer-related entities, and the computer-related entities may be hardware, firmware, and combinations of hardware and software, software, or software being executed. For example, a component may be, but is not limited to: a process running on a processor, a processor, an object, an executable application, an executed thread, a program, and/or a computer. For example, both an application running on a computing device and the computing device can be a component. One or more components may reside within a process and/or a thread of execution, and a component may be located on one computer and/or distributed between two or more computers. In addition, these components can execute from various computer-readable media having various data structures thereon. The components may communicate by way of local and/or remote processes such as in accordance with a signal having one or more data groups (for example, data from one component interacting with another component in a local system, distributed system, and/or across a network such as the Internet with other systems by way of the signal).

This application presents various aspects, embodiments, or features in terms of systems that may include a number of devices, components, modules, and the like. It should be understood and appreciated that each system may include additional devices, components, and modules, and/or may not include all of the devices, components, and modules discussed in connection with the figures. In addition, a combination of these schemes may also be used.

In embodiments of this application, the term "exemplary" is used to represent giving an example, an illustration, or a description. Any embodiment or design scheme described as "exemplarily " in this application should not be explained as being more preferable or more advantageous than another embodiment or design scheme. In particular, the term such as "exemplary" used herein are intended to present the concept in a specific implementation.

In embodiments of this application, information (information), signal (signal), message (message), channel (channel) may sometimes be intermixed, and it should be noted that the meaning to be expressed is consistent when the distinction is not emphasized. "of (of)" "corresponding (corresponding, relevant), "and "corresponding (corresponding)" may sometimes be used interchangeably, and it should be noted that the intended meaning is consistent when the distinction is not emphasized. The terms "system" and "network" may sometimes be used interchangeably and are intended to be interpreted consistently when the distinction is not emphasized, for example, "communication network" means "communication system".

Network architectures and service scenarios described in embodiments of this application are intended to more clearly describe the technical solutions in embodiments of this application, but are not intended to limit the technical solutions provided in embodiments of this application. A person of ordinary skill in the art may know that as the network architectures evolve and a new service scenario emerges, the technical solutions provided in embodiments of this application are further applicable to a similar technical problem.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be used as protection scope of the claims.

## Claims

1. A communication method, applied to a terminal device, wherein the method comprises:
generating a first message, wherein the first message comprises a first request and first assistance information, the first request is for requesting to set up a small data transmission SDT session, and the first assistance information is for determining whether to perform anchor migration, wherein the first assistance information comprises at least one of the following: a duration of SDT traffic, a number of times for which the terminal device expects to continuously transmit data in the SDT session, a time interval and duration for which the terminal device expects to monitor scheduling information, a moving trajectory of the terminal device, mobility of the terminal device, a maximum latency allowed for scheduling the data, or a total amount of data to be sent during the SDT session, wherein the SDT session is for transmission of the SDT traffic; and
sending the first message to a serving access network device.

2. The method according to claim 1, wherein the first assistance information is further for assisting SDT, and the first assistance information further comprises at least one of the following: an indication of whether the data transmitted in the SDT session is fragmented, an amount of remaining data to be transmitted in the SDT session, information of a radio bearer, or attribute information of traffic carried by the radio bearer, wherein the information of the radio bearer comprises at least one of a type of the radio bearer or a type of the traffic carried by the radio bearer, and the attribute information of the traffic comprises at least one of a frequency at which the traffic is sent, a period at which the traffic is sent, time for which the traffic lasts, or a data amount of the traffic.

3. The method according to claim 1 or 2, wherein the method further comprises:
obtaining a first data packet; and
the generating a first message comprises: generating the first message if a size of the first data packet is less than or equal to a first threshold, wherein the first message comprises the first data packet.

4. The method according to claim 3, wherein the method further comprises:
obtaining a second data packet; and
sending a second message or a third message to an anchor access network device if a size of the second data packet is greater than the first threshold, wherein the second message is for requesting the anchor access network device to configure the terminal device to switch to a radio resource control RRC connected state, and the third message indicates to terminate the SDT session.

5. The method according to claim 4, wherein the second message or the third message is any one of the following: an RRC message, a media access control control element MAC CE, or a dedicated control channel DCCH message.

6. The method according to claim 3, wherein the method further comprises:
obtaining a second data packet; and
sending the second data packet by using the SDT session, wherein a size of the second data packet is less than the first threshold, equal to the first threshold, or greater than the first threshold.

7. The method according to claim 6, wherein if a number of data packets sent by using the SDT session reaches a second threshold, the method further comprises:
sending a fourth message or a fifth message to an anchor access network device, wherein the fourth message is for requesting the anchor access network device to configure the terminal device to switch to an RRC connected state, and the fifth message indicates to terminate the SDT session.

8. The method according to claim 7, wherein the fourth message or the fifth message is any one of the following: an RRC message, a media access control control element MAC CE, or a dedicated control channel DCCH message.

9. The method according to any one of claims 1 to 8, wherein the method further comprises:
starting a timer when sending the first message, wherein a duration of the timer is a first duration when the serving access network device is not the anchor access network device, or the duration of the timer is a second duration when the serving access network device is the anchor access network device, wherein the first duration is greater than the second duration; and
monitoring a response message of the first message during running of the timer.

10. A communication method, applied to a serving access network device, wherein the method comprises:
receiving a first message from a terminal device, wherein the first message comprises a first request and first assistance information, the first request is for setting up a small data transmission SDT session, the first assistance information is for determining whether to perform anchor migration;
sending a sixth message to an anchor access network device, wherein the sixth message indicates to set up the SDT session, and the sixth message comprises the first assistance information; and
receiving a seventh message from the anchor access network device, wherein the seventh message comprises second indication information, and the second indication information indicates whether to perform anchor migration.

11. The method according to claim 10, wherein the first assistance information comprises at least one of the following: a duration of SDT traffic, a number of times for which the terminal device expects to continuously transmit data in the SDT session, a time interval and duration for which the terminal device expects to monitor scheduling information, a moving trajectory of the terminal device, mobility of the terminal device, a maximum latency allowed for scheduling the data, or a total amount of data to be sent during the SDT session, wherein the SDT session is for transmission of the SDT traffic.

12. The method according to claim 10 or 11, wherein the first assistance information is further for assisting SDT, and the first assistance information further comprises at least one of the following: an indication of whether the data transmitted in the SDT session is fragmented, an amount of remaining data to be transmitted in the SDT session, information of a radio bearer, or attribute information of traffic carried by the radio bearer, wherein the information of the radio bearer comprises at least one of a type of the radio bearer or a type of the traffic carried by the radio bearer, and the attribute information of the traffic comprises at least one of a frequency at which the traffic is sent, a period at which the traffic is sent, time for which the traffic lasts, or a data amount of the traffic.

13. The method according to any one of claims of 10 to 12, wherein the sixth message further comprises at least one of the following: a locale identifier LCID of the radio bearer transmitting the first message, an information list of a network slice supported by the serving access network device, or a security capability possessed by the serving access network device.

14. The method according to any one of claims 10 to 13, wherein the second indication information indicates to perform anchor migration, and the seventh message further comprises the first assistance information, and the first assistance information is further for assisting the SDT and/or for determining whether to switch the terminal device to an RRC connected state.

15. The method according to any one of claims of 10 to 14, wherein the seventh message further comprises third indication information, wherein the third indication information indicates whether to recommend the terminal device to switch to the RRC connected state.

16. The method according to any one of claims of 10 to 15, wherein the second indication information indicates to perform anchor migration, and the seventh message further comprises second assistance information, and the second assistance information is further for assisting the SDT and/or for determining whether to switch the terminal device to the RRC connected state.

17. The method according to claim 16, wherein the second assistance information comprises at least one of the following: an indication of whether to allow that the terminal device sends or receives data in an RRC inactive state, whether to allow that the terminal device selects network slice information to send the data in the RRC inactive state, a period of the RRC inactive state of the terminal device, time for which the SDT session lasts, a duration for which the terminal device sends a data packet in the RRC inactive state, an interval for which the terminal device sends or receives a data packet in the RRC inactive state, a time interval for which the SDT session is set up, a number and sizes of data packets transmitted during the SDT session, a number and sizes of data packets sent by the terminal device in the RRC inactive state, a moving trajectory of the terminal device in the RRC inactive state, a number of cells traversed by the terminal device when sending data in the RRC inactive state, a moving speed of the terminal device when sending data in the RRC inactive state, or an identifier of an SDT bearer.

18. A communication method, applied to an anchor access network device, wherein the method comprises:
receiving a sixth message from a serving access network device, wherein the sixth message indicates to set up an SDT session, the sixth message comprises first assistance information, the first assistance information is for determining whether to perform anchor migration; and
sending a seventh message to the serving access network device, wherein the seventh message comprises second indication information, and the second indication information indicates whether to perform anchor migration.

19. The method according to claim 18, wherein the first assistance information comprises at least one of the following: a duration of SDT traffic, a number of times for which a terminal device expects to continuously transmit data in the SDT session, a time interval and duration for which the terminal device expects to monitor scheduling information, a moving trajectory of the terminal device, mobility of the terminal device, a maximum latency allowed for scheduling the data, or a total amount of data to be sent during the SDT session, wherein the SDT session is for transmission of the SDT traffic.

20. The method according to claim 18 or 19, wherein the first assistance information is further for assisting SDT, and the first assistance information further comprises at least one of the following: an indication of whether the data transmitted in the SDT session is fragmented, an amount of remaining data to be transmitted in the SDT session, information of a radio bearer, or attribute information of traffic carried by the radio bearer, wherein the information of the radio bearer comprises at least one of a type of the radio bearer or a type of the traffic carried by the radio bearer, and the attribute information of the traffic comprises at least one of a frequency at which the traffic is sent, a period at which the traffic is sent, time for which the traffic lasts, or a data amount of the traffic.

21. The method according to any one of claims 18 to 20, wherein the second indication information indicates to perform anchor migration, and the seventh message further comprises the first assistance information, and the first assistance information is further for assisting the SDT and/or for determining whether to switch the terminal device to an RRC connected state.

22. The method according to any one of claims 18 to 21, wherein the seventh message further comprises third indication information if the second indication information indicates to perform anchor migration, wherein the third indication information indicates whether to recommend that the terminal device switches to the RRC connected state.

23. A communication method, applied to an anchor access network device, wherein the method comprises:
receiving second assistance information from a core network device during setting up of a radio bearer, wherein the second assistance information is for assisting SDT and/or for determining whether to perform anchor migration;
receiving a sixth message from a serving access network device, wherein the sixth message indicates to set up an SDT session, the sixth message comprises first assistance information, the first assistance information is for determining whether to perform anchor migration; and
sending a seventh message to the serving access network device, wherein the seventh message comprises second indication information, and the second indication information indicates whether to perform anchor migration.

24. The method according to claim 23, wherein the second assistance information is information collected by the core network device or static subscription information.

25. The method according to claim 23 or 24, wherein if the second indication information indicates to perform anchor migration, the seventh message further comprises the first assistance information and the second assistance information, and the first assistance information and the second assistance information are further for determining whether to switch a terminal device to an RRC connected state.

26. A data processing apparatus, wherein the data processing apparatus comprises: a processor and a memory, wherein
the memory is configured to store computer executable instructions; and when the processor executes the computer executable instructions, the data processing apparatus is enabled to perform the method according to any one of claims 1 to 9, 10 to 17, 18 to 22, or 23 to 25.

27. A computer-readable storage medium, wherein the computer-readable storage medium stores a computer program; and when the computer program is executed by a computer, the computer is enabled to perform the method according to any one of claims 1 to 9, 10 to 17, 18 to 22, or 23 to 25.
